# EUROPÄISCHE PATENTSCHRIFT

(11) **EP 3 291 973 B1**
(45) Veröffentlichungstag und Bekanntmachung des Hinweises auf die Patenterteilung: **12.08.2020**
(21) Anmeldenummer: 16708641.2
(22) Anmeldetag: 04.03.2016
(51) Int. Cl.: B29C 70/38, B29C 70/54

(54) **FASERLEGEMASCHINE UND VERFAHREN ZUM LEGEN EINER FASERBAHN AUF EINEM WERKSTÜCK**
FIBER-LAYING MACHINE AND METHOD FOR LAYING FIBROUS WEB ONTO A WORKPIECE
DISPOSITIF DE DEPOSE DE FIBRES ET PROCEDE POUR DEPOSER UNE GERBE DE FIBRES SUR UNE PIECE

(30) Priorität: 06.03.2015 DE 102015002777
(43) Veröffentlichungstag der Anmeldung: 14.03.2018
(73) Patentinhaber: Broetje-Automation GmbH, 26180 Rastede (DE)
(72) Erfinder: PETERS, Axel, 28757 Bremen (DE); BOGE, Christian, 74821 Mosbach (DE); MEYER, Matthias, 79576 Weil am Rhein (DE)
(74) Vertreter: Gottschald Patentanwälte Partnerschaft mbB
(86) Internationale Anmeldenummer: PCT/EP2016/054678
(87) Internationale Veröffentlichungsnummer: WO 2016/142297

(56) Entgegenhaltungen:
- EP-A2- 1 001 066
- WO-A1-2014/191046
- DE-A1- 10 005 202
- FR-A1- 2 686 080
- FR-A1- 3 006 938
- US-A1- 2009 148 647
- US-A1- 2014 260 858

## Beschreibung

Die Erfindung betrifft eine Faserlegemaschine sowie ein Verfahren zur Legung einer Faserbahn auf einem Werkstück.

Aus der Druckschrift WO 2009/042 225 A2 ist eine Faserlegemaschine zur Herstellung von Fasergelegen bekannt. Die Faserlegemaschine weist einen dreiachsigen Tisch auf, der relativ zu einem Faserlegekopf um eine vertikale Drehachse drehbar und in zwei Richtungen linear verfahrbar ist. Auf dem dreiachsigen Tisch ist ein Vakuumtisch angeordnet, der als glatte Werkzeugoberfläche dient. Der Faserlegekopf ist oberhalb des Vakuumtischs fest an einem Maschinengestell angeordnet und weist Führungsschienen für ein Faserband auf, die mittels eines linearen Aktuators in einer vertikalen Richtung verlagerbar sind, um das Faserband zu der Werkzeugoberfläche zuzustellen.

Ferner ist aus der EP 1 001 066 A2 eine Faserlegemaschine zur Herstellung von Fasergelegen mit einem Legekopf bekannt, welcher eine Klemmvorrichtung aufweist.

Es ist die Aufgabe der Erfindung, eine Faserlegemaschine anzugeben, die eine schnelle und störungsfreie Verlegung von Fasern erlaubt.

Diese Aufgabe wird für eine eingangs genannte Faserlegemaschine mit den Merkmalen des Anspruchs 1 gelöst. Durch das Vorziehen der Fasern um den Verlegehub ist eine Verlegung ermöglicht, bei der die Fasern vor dem eigentlichen Aufbringen aus der Bereitstellungseinheit gezogen werden, wobei die Fasern meist von Rollen abgewickelt und über mehrere Umlenker geführt werden. Während des nachfolgenden, unmittelbaren Aufbringens auf das Werkstück müssen die Fasern nicht mehr aus der Faser-Bereitstellungseinheit gezogen werden. Diese Aufteilung des Faservorschubs ermöglicht eine Optimierung des jeweiligen Bewegungsabschnitts des Verlegekopfes.

Unter einem Werkstück wird im Sinne der Erfindung jede Unterlage verstanden, auf die die Fasern planmäßig aufgebracht werden. Insbesondere kann es sich bei einer solchen Unterlage um eine ebene Fläche handeln, zum Beispiel in Form einer später entfembaren Folie oder einer Gleitbeschichteten Oberfläche einer Trägers, von dem das Fasergelege später abgelöst wird. Ebenso bildet ein teilweise fertiggestelltes Fasergelege oder eine andere Vorstufe eines Produktes, die mit Fasern zu belegen ist, ein Werkstück im Sinne der Erfindung. Ferner kann es sich bei der Unterlage um ein vorgeformtes Formwerkzeug handeln, in dem eine definierte Ausformung einer späteren Unterseite des Fasergeleges ausgebildet ist.

Die einzelnen Faserstränge sind bei einer erfindungsgemäßen Faserlegemaschine allgemein bevorzugt bereits bei ihrem Vorliegen in der Faser-Bereitstellungseinheit mit einem Bindemittel vorbeschichtet. Solche vorbeschichteten Fasern erlauben eine besonders kontrollierte Verklebung bzw. Anbindung an dem Fasergelege, wobei die Menge an Bindemittel jederzeit optimal dosiert ist. Zur Verbesserung des Bindevorgangs kann an dem Legekopf insbesondere eine Heizvorrichtung, zum Beispiel in Form eines Wärmestrahlers, vorgesehen sein. Grundsätzlich ist die Zuführung von vorbeschichteten Fasern zum Verlegekopf im Vergleich zu unbeschichteten Fasern mit spezifischen Anforderungen verbunden. Daher kann die erfindungsgemäße Ausgestaltung einer Faserlegemaschine den Fasertransport für beschichtete Fasern besonders optimieren. Solche Bindemittel werden in Fachkreisen auch als Matrix bezeichnet.

Unter einer lösbaren Klemmvorrichtung wird jede Vorrichtung verstanden, die in einem geklemmten Zustand ausreichende Haltekräfte auf die Faserstränge ausüben kann, um diese gegen ihren reibungsbedingten Widerstand zuverlässig aus der Faser-Bereitstellungseinheit zu ziehen.

Unter einer Faser-Bereitstellungeinheit wird im Sinne der Erfindung jeder Vorratsbereich zur Ausgabe der Faserstränge verstanden. Insbesondere können die jeweiligen Faserstränge auf wechselbaren Spulen aufgewickelt sein. Die Faser-Bereitstellungeinheit umfasst auch Umlenkungen der Faserstränge, mittels derer eine Zuführung zu dem beweglichen Legekopf erfolgt. Eine Positionierung der wechselbaren Spulen bzw. eines Spulenlagers relativ zu dem Legekopf ist hierdurch weitgehend frei wählbar.

Die Spulen können bei allgemein bevorzugten Ausführungsformen der Erfindung auf entgegen einer Abspulrichtung angetriebenen Drehachsen sitzen, wobei die Antriebe der Drehachsen eine Drehmomentbegrenzung aufweisen. Die Drehmomentbegrenzung kann zum Beispiel durch eine Reibkupplung oder auch durch eine drehmomentabhängige Ansteuerung eines elektrischen Antriebs erfolgen. Auf diese Weise kann der jeweilige Faserstrang bei Bedarf, insbesondere während des Abspulens, in einer definierten Vorspannung gehalten werden.

Weiterhin allgemein bevorzugt kann die Faser-Bereitstellungseinheit ein oder mehrere Tänzermagazine aufweisen, um den Transport der Faserstränge unter definierter Spannung zu halten und zu vergleichmäßigen.

Allgemein vorteilhaft ist das Werkstück in der Faserlegemaschine um eine Achse schwenkbar aufgenommen, so dass die Verlegerichtung der Fasern relativ zu dem Werkstück einstellbar veränderbar ist. Je nach Bedarf kann eine Halterung des Werkstücks auch andere Bewegungen aufweisen, zum Beispiel in einer zu der Verlegerichtung parallelen Ebene.

Bei einer bevorzugten Ausführungsform der Erfindung ist die Faser-Bereitstellungseinheit ortsfest angeordnet. Dies erlaubt einen großen Vorrat an Fasersträngen bei gutem Wartungszugang. Besonders bevorzugt, aber nicht notwendig ist der Legekopf nur in genau einer Ebene relativ zu der Faser-Bereitstellungseinheit verfahrbar. Eine solche Begrenzung der Bewegung des Legekopfes in einer Ebene ist mit relativ einfachen Mitteln zur Führung der Faserstränge zwischen dem Legekopf und der Faser-Bereitstellungseinheit realisierbar.

Allgemein bevorzugt ist es vorgesehen, dass die Klemmvorrichtung während des Verlegens des Abschnitts der Faserbahn gelöst ist. Dabei wird eine um den Verleghub vorgezogene Länge der Faserbahn, die sich in einem Speicherbereich zwischen der Faser-Bereitstellungeinheit und dem Legekopf befindet, verlegt. Der Legekopf fährt dabei überwiegend in die Gegenrichtung der Bewegung, mittels der das Vorziehen der Faserbahn erfolgt ist.

Bei einer allgemein bevorzugten Detailgestaltung der Erfindung umfasst die Klemmvorrichtung zumindest eine, besonders bevorzugt zwei miteinander zusammenwirkende Klemmrollen. Die Verwendung von Klemmrollen verringert die Ansammlung von Bindemittelabrieb und Fasern und ermöglicht auf einfache Weise die Etablierung eines Losbrechmoment zum Schutz der Anlage bei einer Fehlfunktion. Besonders bevorzugt können die Klemmrollen entgegen der Vorziehrichtung mit einem Freilauf ausgestattet sein. Hierdurch können die Klemmrollen zum Beispiel noch gegeneinander gedrückt werden, wenn ein abwärts der Klemmrollen angeordnetes Förderglied die Faserstränge bereits zum Verlegen weiter vorzieht. In bevorzugter Detailgestaltung werden die Klemmrollen erst kurz nach Beginn eines solchen weiteren Vorziehens gelöst, um die Faserführung insgesamt zu vergleichmäßigen.

Ein allgemein vorteilhaft ausgebildeter Legekopf umfasst zwei gewinkelt zueinander verlaufende Zuführungen, wobei mittels einer ersten der Zuführungen eine erste Gruppe von Fasersträngen und mittels der zweiten der Zuführung eine zweite Gruppe von Fasersträngen in einen Kreuzungsbereich geführt werden, um die beiden Gruppen von Fasersträngen zu der Faserbahn zu vereinigen. Die Gruppen von Fasersträngen können dabei senkrecht zu der Verlegerichtung um eine Faserstrangbreite versetzt angeordnet sein, und die vereinigten Gruppen von Fasersträngen können zum Beispiel mittels einer Kompaktierungsrolle homogenisiert und auf das Werkstück aufgebracht werden. Ein solcher Legekopf mit zwei Führungen ist hinsichtlich der Ausrichtung der Führungen bevorzugt im Wesentlichen spiegelsymmetrisch gegenüber einer Mittelebene ausgebildet.

Allgemein bevorzugt sind die Fasern mittels einer an dem Legekopf angeordneten Schneidvorrichtung abtrennbar, wobei die Schneidvorrichtung eine Mehrzahl von separat ansteuerbaren Schneidgliedern umfasst, die quer zu der Verlegerichtung verschiedene Teile der Fasern abtrennen können. Hierdurch können allgemein der Anfang und/oder das Ende der jeweils verlegten Bahn in seiner Form gestaltet werden, so dass auch bei beliebig geformten Werkstücken allenfalls ein geringer randseitiger Überstand oder Fehlstand der Faserbahn vorliegt.

Bei einer besonders bevorzugten Weiterbildung hat die Schneidvorrichtung dabei ein Aktuatorglied zur Betätigung zumindest eines der Schneidglieder, wobei das Aktuatorglied von dem Schneidglied getrennt ausgebildet ist. Besonders bevorzugt ist das Aktuatorglied an einem zu Wartungszwecken ablösbaren Oberteil des Legekopfes angeordnet. Ein solches Oberteil kann zum Beispiel gegenüber einem Unterteil aufschwenkbar ausgebildet sein, so dass die einem Verschleiß unterliegenden Schneidglieder und gegebenenfalls weitere mechanische Elemente des Legekopfes auf einfache Weise in dem Unterteil zugänglich sind. Es versteht sich, dass bei einer Ausbildung des Legekopfes mit zwei gewinkelt zueinander verlaufenden Führungen vorzugsweise über jeder der Führungen ein jeweiliges Oberteil angeordnet ist. Die Faserstränge können insbesondere zwischen dem Oberteil und dem Unterteil in dem Legekopf verlaufen.

Vorteilhaft ist an dem Legekopf zumindest eine Vorförderrolle zum angetriebenen Vorschub vorgesehen, wobei die Vorförderrolle zwischen der Klemmvorrichtung und einer austrittsseitigen Kompaktierungsrolle des Legekopfes angeordnet ist. Der angetriebene Vorschub der Faserstränge dient einem besonders gleichmäßigen Aufbringen der Faserbahn. Zudem dient die Vorförderrolle einer Zuführung eines im Legekopf abgeschnittenen Endes der Faserbahn zu dem Werkstück, um das Legen einer neuen Faserbahn zu beginnen.

Bei einer allgemein bevorzugten Ausführungsform der Erfindung ist die Faserlegemaschine vollständig auf einem Maschinengestell aufgebaut. Dies erlaubt gegebenenfalls ein einfaches Versetzen oder einen Austausch der gesamten Faserlegemaschine in einer Produktionsanlage, ohne dass die Maschine in Einzelteilen demontiert werden muss. Ein solcher Aufbau begünstigt zudem die Integration der Faserlegemaschine in eine automatisierte Produktionsanlage.

Weiterhin vorteilhaft hat die Faserlegemaschine ein klimatisch geschlossenes Gehäuse. Dies ist im Sinne der Erfindung so zu verstehen, dass zumindest ein das Werkstück umgebender Bereich der Faserlegemaschine innerhalb des Gehäuses mit einer kontrollierten Klimatisierung versehen ist. Besonders während und unmittelbar nach dem Legen von Faserbahnen ist eine solche Klimatisierung für ein gutes Ergebnis wichtig. Eine Klimatisierung im Sinne der Erfindung umfasst auch eine bloße Temperierung ohne Beeinflussung einer Luftfeuchte.

Um die Faserlegemaschine einfach bedienen zu können und um einer Integration in eine automatisierte Produktionsanlage zu begünstigen, ist das Werkstück bevorzugt auf einer automatisiert transportierbaren Palette angeordnet. Unter einer Palette ist im Sinne der Erfindung jeder austauschbare Träger für das Werkstück zu verstehen.

Bei einer möglichen Weiterbildung kann dadurch Transportraum eingespart werden, dass eine das Werkstück tragende Oberfläche der Palette um einen Winkel von weniger als 30 Grad gegenüber einer Senkrechten geneigt ist. Die schließt insbesondere eine senkrechte Ausrichtung der Oberfläche ein. Auf diese Weise kann eine große Raumhöhe einer Produktionshalle genutzt werden, ohne dass bei Transport und Zuführung der Palette mit dem Werkstück zu viel Platz in der Breite eingenommen wird. In diesem Sinne kann es auch zudem vorgesehen sein, dass die Verlegerichtung in einer Ebene verläuft, die weniger als 30 Grad gegenüber der Senkrechten geneigt ist.

Die Aufgabe der Erfindung wird zudem gelöst durch ein Verfahren zum Legen einer Faserbahn auf einem Werkstück, umfassend die Schritte:
a. Einklemmen der zu verlegenden Fasern in einer Klemmvorrichtung eines Lege-kopfes;
b. Verfahren des Legekopfes relativ zu einer Faser-Bereitstellungseinheit in eine Startposition, wobei die Fasern um einen Verlegehub aus der Faser-Bereitstellungseinheit ausgezogen werden;
c. Lösen der Klemmvorrichtung;
d. Verfahren des Legekopfes von der Startposition in eine Endposition unter Verlegung der Fasern auf dem Werkstück, so dass während des Aufbringens der Fasern 13 auf dem Werkstück 12 keine Fasern 13 aus der Faser-Bereitstellungseinheit 42 gezogen werden..

Durch diesen Vorgang wird ein gleichmäßiges Ablegen der Fasern auf dem Werkstück sichergestellt, ohne dass durch ein gleichzeitiges Ausziehen aus der Faser-Bereitstellungeinheit ungewollte Kräfte eingeleitet werden. Zudem lassen sich die Geschwindigkeit des Vorzugs der Fasern und die Geschwindigkeit des Ablegens unabhängig voneinander einstellen, so dass der Gesamtvorgang optimiert ist. Im Regelfall erfolgt das Ausziehen der Fasern im Zuge einer ersten, hinlaufenden Bewegung des Legekopfes, bei der kein Kontakt zum Werkstück besteht. Nachfolgend wird der Legekopf auf das Werkstück aufgesetzt, so dass mittels einer rücklaufenden Bewegung die vorgezogenen Fasern auf dem Werkstück abgelegt werden.

Besonders bevorzugt wird das Verfahren mittels einer erfindungsgemäßen Faserlegemaschine durchgeführt. Dabei ist insbesondere jedes der spezifischen Merkmale einer erfindungsgemäßen Faserlegemaschine als einzelnes Merkmal zur Verbesserung eines erfindungsgemäßen Verfahrens tauglich.

Vorzugsweise werden die Fasern nach Schritt c. mittels einer angetriebenen Vorförderrolle gegenüber dem Legekopf bewegt, wobei die Fasern insbesondere nicht mittels der Vorförderrolle aus der Faser-Bereitstellungseinheit ausgezogen werden. Damit kann auf einfache Weise ein anfänglicher Vorschub zum Start des Legevorgangs erzielt werden.

Es darf darauf hingewiesen werden, dass in Abhängigkeit von der konstruktiven Auslegung der Faserlegemaschine eine beliebige Anzahl von Zwischenschritten zwischen den oben genannten Verfahrensschritten vorgesehen sein kann. Im Rahmen aller insgesamt vorgesehenen Schritte muß insbesondere gewährleistet sein, dass ständig irgendeine Fixierung der Fasern vorliegt um zu verhindern, dass die Fasern den Faserlegekopf unkontrolliert verlassen.

Ferner kann ein System zur Fertigung von Faser-Verbundbauteilen vorgesehen sein, umfassend
zumindest eine erste Faserlegemaschine zur Aufbringung von Fasergelegen auf ein Werkstück; und
eine weitere, von der Faserlegemaschine verschiedene Bearbeitungsstation zur Modifizierung des Werkstücks,
wobei das Werkstück mittels einer automatisierten Fördereinrichtung sowohl zu der Faserlegemaschine als auch zu der weiteren Bearbeitungsstation verbringbar ist.

Bisher wurden Faserlegemaschinen als Einzelmaschinen zur Herstellung von hochgradig individuellen und aufwendigen Bauteilen in geringen Stückzahlen eingesetzt. Um einen hohen Durchsatz von Werkstücken im Rahmen einer Serienfertigung zu erzielen, ist die bevorzugte Anbindung einer Faserlegemaschine an eine automatisierte Fertigung von Werkstücken vorgesehen.

Allgemein bevorzugt ist zumindest eine Faserlegemaschine eines bevorzugten Systems als eine erfindungsgemäße Faserlegemaschine ausgebildet. Allgemein kann ein bevorzugtes System aber auch mehrere Faserlegemaschinen verschiedener Bauart aufweisen, um den Prozess der Werkstückfertigung zu optimieren.

Bei einer besonders bevorzugten Ausführungsform umfasst das System eine zweite Faserlegemaschine, die räumlich von der ersten Faserlegemaschine separiert und mittels der automatisierten Fördereinrichtung mit der ersten Faserlegemaschine verbunden ist. Bevorzugt, aber nicht notwendig sind die zumindest zwei Faserlegemaschinen dabei baugleich.

Bei einer ersten möglichen Weiterbildung sind die Faserlegemaschinen dabei als parallele Bearbeitungsstationen vorgesehen, die dieselben Bearbeitungsschritte an simultan bearbeiteten Werkstücken durchführen. Hierdurch lässt sich der Durchsatz erhöhen und an einen eventuell höheren Durchsatz anderer Bearbeitungsstationen anpassen.

Bei einer hierzu alternativen oder ergänzenden Ausführungsform ist es vorgesehen, dass die Faserlegemaschinen als sequentielle Bearbeitungsstationen nacheinander verschiedene Bearbeitungsschritte einem Werkstück durchführen. Hierdurch ist die Herstellung des Werkstücks weiter optimierbar und es können insbesondere andere Bearbeitungsschritte zwischen den Bearbeitungen in den Faserlegemaschinen vorgenommen werden.

Allgemein vorteilhaft umfasst das System zumindest eine Pufferstation zur Aufnahme, Speicherung und Weitergabe mehrerer Werkstücke. Dies erlaubt eine erheblich verbesserte Logistik in einer automatisierten Fertigung mit hohem Durchsatz. Bevorzugt verbleiben die Werkstücke in den Pufferstationen jeweils auf ihren Paletten.

Bei einer bevorzugten Ausführungsform umfasst die weitere Bearbeitungsstation zumindest eines ausgewählt aus der Gruppe Umformvorrichtung, Temperaturkammer und/oder Lackiervorrichtung. Eine solche Bearbeitungsstation wird besonders für die Herstellung von Serienteilen für Automobile oder Flugzeuge vorteilhaft in automatisierter Form mit der Faserlegemaschine kombiniert.

Zur Einsparung von Standfläche und zur allgemein verbesserten Flexibilität umfasst die automatisierte Fördereinrichtung bevorzugt eine Ladevorrichtung, mittels der eine Beladung und Entladung der Faserlegemaschine von nur einer Seite ermöglicht ist. Dies erlaubt das Einfahren und Ausfahren des Werkstücks in die Faserlegemaschine nach Art einer Sackgasse. Allgemein vorteilhaft ist mittels der Ladevorrichtung zugleich ein Wechsel eines bearbeiteten Werkstück mit einem unbearbeiteten Werkstück möglich.

Dabei kann die Ladevorrichtung in einer bevorzugten Detailgestaltung als Drehwechseleinrichtung ausgebildet, die eine drehbare Halterung zur Aufnahme von zumindest zwei Werkstücken umfasst.

Ferner wird eine Faserlegemaschine beschrieben, die mit einer vorstehend beschriebenen Ladevorrichtung kombiniert ist, mittels der eine Beladung und Entladung der Faserlegeanlage von nur einer Seite ermöglicht ist. Es versteht sich, dass eine solche Faserlegemaschine zudem jedes der weiteren Merkmale von vorstehend beschriebenen Faserlegemaschinen umfassen kann.

Allgemein bevorzugt ist ein Legekopf der Faserlegemaschine in einer senkrechten Ebene bewegbar, wobei ein Winkel zwischen der Ebene und einem Ladeweg der Faserlegemaschine zwischen 0° und 30° beträgt. Dies erlaubt die Konstruktion einer raumsparenden und insbesondere schmal bauenden Faserlegemaschine. Besonders bevorzugt sind der Ladeweg und die Ebene dabei um 0° gewinkelt, also parallel bzw. auf einer Linie angeordnet. Allgemein vorteilhaft kann sich der Legekopf nur in der senkrechten Ebene bewegen.

Unter einem Ladeweg wird allgemein ein insbesondere gerade verlaufender Abschnitt zum automatisierten Transport des Werkstücks zwischen einem Außenbereich der Faserlegemaschine und einer Bearbeitungsposition des Werkstücks verstanden. Der Ladeweg ist somit zum einen ein Teil der automatisierten Fördereinrichtung und zum anderen ein Teil der Faserlegemaschine.

Bei einem möglichen Ausführungsbeispiel ist ein Legekopf der Faserlegemaschine in einer senkrechten Ebene bewegbar, wobei ein Faserspulenlager der Faserlegemaschine eine Mehrzahl von Faserspulen mit zueinander parallelen Spulenachsen umfasst, wobei ein Winkel zwischen den Spulenachsen und der senkrechten Ebene zwischen 60° und 90° beträgt. Dies erlaubt aufgrund der Anordnung der Faserspulenlager und entsprechender Faserführungen ebenfalls eine schmal bauende Faserlegemaschine. Besonders bevorzugt beträgt der Winkel etwa 90°. Auf diese Weise können der Ladeweg, der Legekopf und die Faserspulenlager annähernd in einer Linie hintereinander angeordnet werden. Insbesondere sind zumindest zwei Faserspulenlager vorgesehen, die jeweils einer Gruppe von Fasersträngen zugeordnet sind und die nebeneinander positioniert werden.

Die vorstehend beschriebenen Ausgestaltungen der Faserlegemaschine bezüglich der Ausrichtung von Bewegungsebene des Legekopfes, Ladeweg und/oder Spulenachsen erlauben weitgehende Freiheiten bei der konstruktiven Ausgestaltung und räumlichen Dimensionierung. Dies betrifft insbesondere die Anordnung von weiteren Komponenten der Faserlegemaschine, insbesondere eine elektrische Steuerungseinheit und eine Klimatisierungseinheit.

Ferner wird ein System zur Fertigung von Faser-Verbundbauteilen beschrieben, umfassend zumindest eine erste Faserlegemaschine zur Aufbringung von Fasergelegen auf ein Werkstück; und
eine weitere, baugleiche oder verschiedene Bearbeitungsstation zur Modifizierung des Werkstücks;
wobei das Werkstück mittels einer automatisierten Fördereinrichtung sowohl zu der Faserlegemaschine als auch zu der weiteren Bearbeitungsstation verbringbar ist,
wobei die Fördereinrichtung eine Ladevorrichtung umfasst, mittels der eine Beladung und Entladung der Faserlegeanlage von nur einer Seite ermöglicht ist. Besonders bevorzugt ist die Ladevorrichtung dabei in einer bevorzugten Detailgestaltung der als Drehwechseleinrichtung ausgebildet, die eine drehbare Halterung zur Aufnahme von zumindest zwei Werkstücken umfasst. Ein solches System ist mit sämtlichen individuellen Merkmalen eines vorstehend beschriebenen Systems kombinierbar. Insbesondere kann die Faserlegemaschine eine vorstehend beschriebene Faserlegemaschine sein.

Weitere Vorteile und Merkmale der Erfindung ergeben sich aus den nachfolgend beschriebenen Ausführungsbeispielen sowie aus den abhängigen Ansprüchen.

Nachfolgend werden mehrere Ausführungsbeispiele der Erfindung beschrieben und anhand der anliegenden Zeichnungen näher erläutert. In der Zeichnung zeigt
- Fig. 1: eine schematische Darstellung eines Systems zur Fertigung von Faser-Verbundbauteilen gemäß einem ersten Ausführungsbeispiel mit mehreren parallel zueinander angeordneten Faserlegemaschinen zur Herstellung von Fasergelegen,
- Fig. 2: eine perspektivische Ansicht einer erfindungsgemäßen Faserlegemaschine, insbesondere als Teil des in Fig. 1 dargestellten Systems,
- Fig. 3: eine Draufsicht auf die Faserlegemaschine aus Fig. 2,
- Fig. 4: eine perspektivische Schnittdarstellung durch die Faserlegemaschine aus Fig. 3 entlang der Schnittlinie IV-IV,
- Fig. 5: eine schematische Darstellung eines Systems zur Fertigung von Faser-Verbundbauteilen gemäß einem zweiten Aus führungsbei spiel mit in Reihe zueinander angeordneten Faserlegemaschinen zur Herstellung von Fasergelegen,
- Fig. 6: eine weitere Ausführungsform, bei der eine einseitige Ladevorrichtung für eine Faserlegemaschine vorgesehen ist,

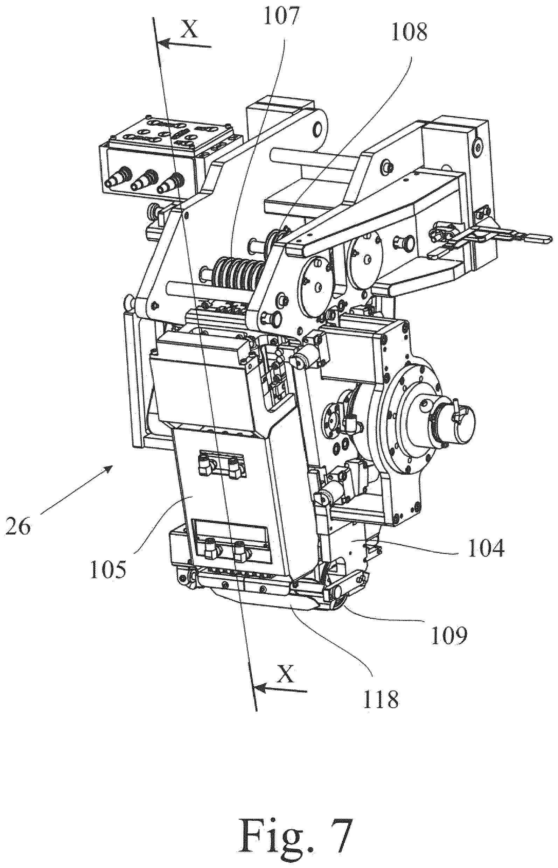

- Fig. 7: eine räumliche Ansicht eines erfindungsgemäßen Legekopfes der Faserlegemaschine aus Fig. 2,
- Fig. 8: den Legekopf aus Fig. 7 ein einer zu Wartungszwecken geöffneten Position,
- Fig. 9: den Legekopf aus Fig. 8 aus einer anderen Perspektive und

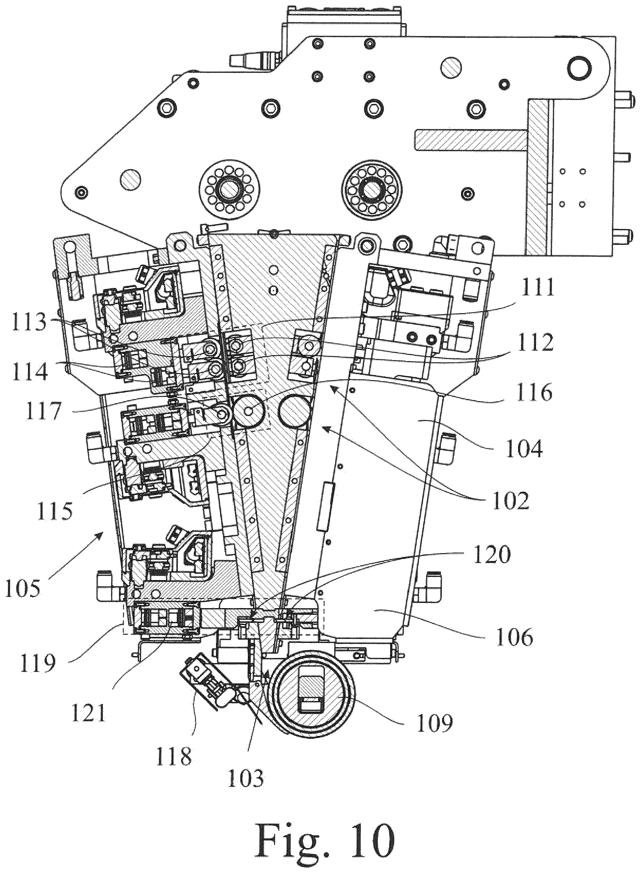

- Fig. 10: eine Schnittansicht durch den Legekopf aus Fig. 7 entlang der Schnittlinie X-X,
- Fig. 11: eine erste Abwandlung der Ausführungsfonn aus Fig. 6,
- Fig. 12: eine zweite Abwandlung der Ausführungsform aus Fig. 6.

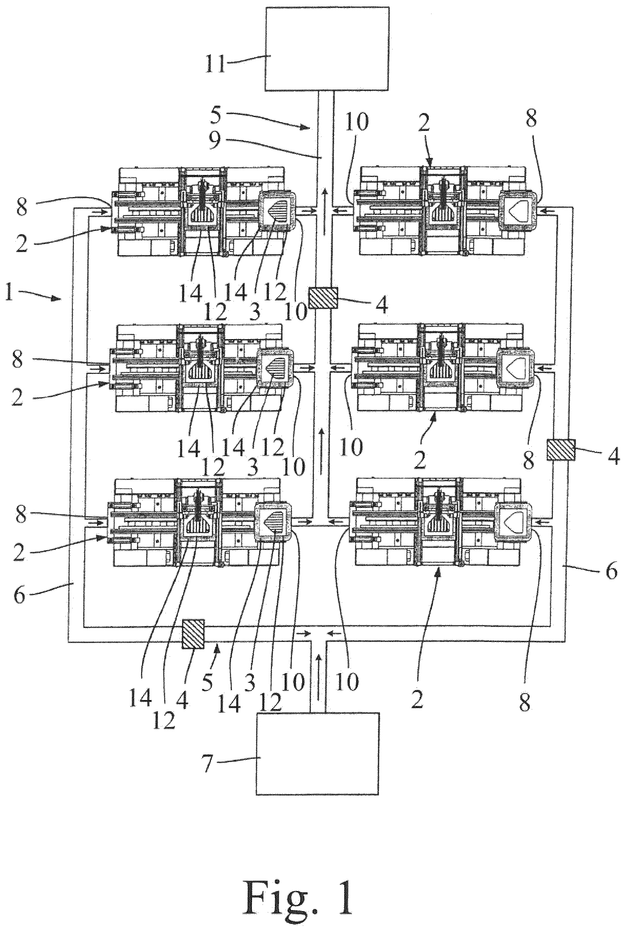

Nachfolgend ist anhand der Fig. 1 bis 4 ein erstes Ausführungsbeispiel der Erfindung beschrieben. Ein System zur Fertigung von Faser-Verbundbauteilen 1, nachfolgend auch Faserlegeanlage genannt, weist mehrere Faserlegemaschinen 2 zur Herstellung von Fasergelegen 3 auf. Die Faserlegemaschinen 2 sind baugleich. In Fig. 1 weist die Faserlegeanlage 1 beispielsweise sechs baugleiche Faserlegemaschinen 2 auf, die in zwei Gruppen angeordnet sind. Jede Gruppe weist drei Faserlegemaschinen 2 auf, die parallel zueinander angeordnet sind. Zum automatischen Be- und Entladen der Faserlegemaschinen 2 weist die Faserlegeanlage 1 eine Fördereinrichtung 4, 5 auf. Die Fördereinrichtung weist beispielsweise mehrere Förderschlitten 4 auf, die auf einer Führung 5 verfahrbar sind. Die Führung 5 weist einen Beladeabschnitt 6 auf, der von einer Aufnahmestelle 7 bis zu einer jeweiligen Beladeseite 8 der Faserlegemaschinen 2 verläuft.

Auf dem Beladeabschnitt 6 ist mindestens ein Förderschlitten 4 verfahrbar angeordnet. Die Führung 5 weist weiterhin einen Entladeabschnitt 9 auf, der von einer jeweiligen Entladeseite 10 der Faserlegemaschinen 2 bis zu einer Ablegestelle 11 verläuft. Auf dem Entladeabschnitt 9 ist mindestens ein Förderschlitten 4 verfahrbar angeordnet.

Mittels der Fördereinrichtung 4, 5 sind Werkstücke 12, also mit Fasern 13 zu belegende Objekte, von der Aufnahmestelle 7 bis zu den Beladeseiten 8 verfahrbar und mit Fasern 13 belegte Werkstücke 12 sind von den Entladeseiten 10 zu der Ablegestelle 11 verfahrbar.

Die Werkstücke 12 sind auf Paletten 14 angeordnet. Die Faserlegemaschinen 2 sind baugleich, so dass nachfolgend lediglich eine der Faserlegemaschinen 2 beschrieben ist.

Die Faserlegemaschine 2 weist ein Maschinengestell 15 mit einem Maschinenbett 16 und daran angeordneten Querträgem 17, 18 auf. Das Maschinenbett 16 erstreckt sich im Wesentlichen in einer horizontalen x-Richtung und einer senkrecht dazu verlaufenden horizontalen y-Richtung. Die Querträger 17, 18 verlaufen parallel zu der y-Richtung und sind in der x-Richtung beabstandet auf dem Maschinenbett 16 angeordnet. Die Querträger 17, 18 sind jeweils an beiden Enden mittels Längsstützen 19 in einer z-Richtung oberhalb des Maschinenbetts 16 angeordnet. Die z-Richtung verläuft senkrecht zu der x-und der y-Richtung, so dass die x-, y- und z-Richtung ein kartesisches Koordinatensystem bilden.

An dem Maschinenbett 16 sind zwei X-Führungsschienen 20 angeordnet, die sich in der x-Richtung erstrecken und in der y-Richtung zueinander beabstandet sind. An den x-Führungsschienen 20 ist ein x-Schlitten 21 gelagert, der mittels eines x-Antriebsmotors 22 entlang der x-Richtung zwischen der Beladeseite 8 und der Entladeseite 10 verfahrbar ist. Hierzu erstrecken sich die X-Führungsschienen 20 in der x-Richtung entlang des
gesamten Maschinenbetts 16. An dem x-Schlitten 21 ist ein Werkzeugtisch 23 angeordnet, der mittels eines c-Antriebsmotors 24 um eine vertikale Schwenkachse 25 verschwenkbar ist. Die vertikale Schwenkachse 25 wird auch als c-Achse bezeichnet. Die c-Achse 25 verläuft parallel zu der z-Richtung.

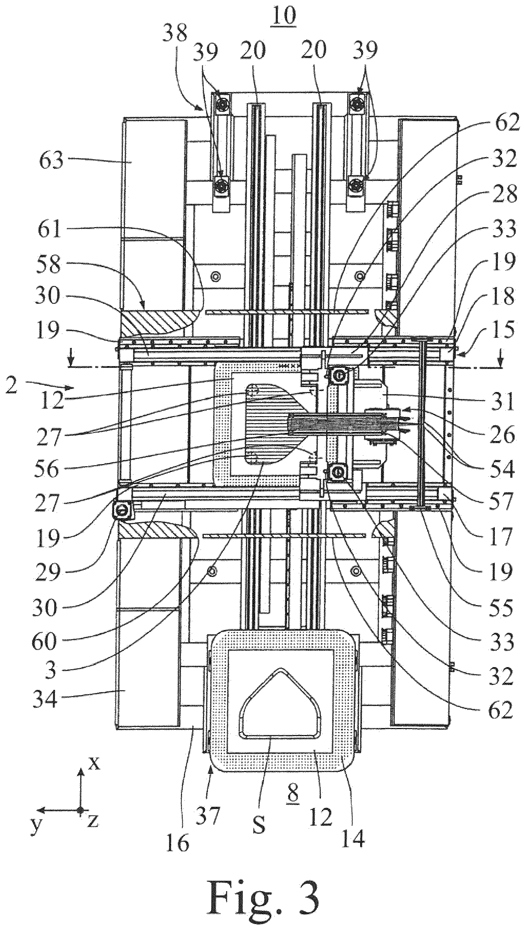

Der Werkzeugtisch 23 ist mittels des X-Schlittens 21 ausschließlich in der x-Richtung linear verfahrbar. Der Werkzeugtisch 23 dient zum Positionieren des jeweiligen Werkstücks 12 relativ zu einem Faser-Legekopf 26 (nachfolgend Legekopf genannt). Zum mechanischen Spannen und Lösen der Paletten 14 mit dem jeweiligen Werkstück 12 weist der Werkzeugtisch 23 mehrere Spanneinheiten 27 auf. Die Spanneinheiten 27 sind in Fig. 3 schematisch dargestellt. Die Spanneinheiten 27 sind grundsätzlich bekannt und beispielsweise als Nullpunktspanner 15 ausgebildet. Die Spanneinheiten 27 sind elektromechanisch, hydraulisch oder pneumatisch betätigbar. Zum Legen von Fasern 13 auf eine zweidimensionale oder dreidimensionale Oberfläche S des jeweiligen Werkstücks 12 ist der Legekopf 26 in der z-Richtung oberhalb des Werkzeugtischs 23 positionierbar.

Der Legekopf 26 ist entlang der y-Richtung und entlang der z-Richtung verfahrbar. Hierzu ist an den Querträgem 17, 18 ein y-Schlitten 28 gelagert, der entlang der y-Richtung mittels eines y-Antriebsmotors 29 linear verfahrbar ist. Der y-Schlitten 28 ist an y-Führungsschienen 30 gelagert, die an einer Oberseite der Querträger 17, 18 angeordnet sind. Der y-Schlitten 28 erstreckt sich zwischen den Querträgem 17, 18. Zum Verfahren des Legekopfs 26 in der z-Richtung ist an dem y-Schlitten 28 ein z-Schlitten 31 angeordnet. Der z-Schlitten 31 ist an z-Führungsschienen 32 gelagert und mittels z-Antriebsmotoren 33 entlang der z-Richtung verfahrbar. Die z-Führungsschienen 32 verlaufen parallel zu der z-Richtung und sind in der x-Richtung zueinander beabstandet.

Der Legekopf 26 ist an dem z-Schlitten 31 angeordnet. Vorzugsweise ist der Legekopf 26 auswechselbar befestigt. Der Legekopf 26 ist ausschließlich in y-Richtung linear verfahrbar. Ein Verschwenken des Legekopfs 26 an dem z-Schlitten 31 ist nicht möglich.

Bei einer nicht dargestellten, alternativen Ausführungsform kann der Legekopf 26 zusätzlich oder alternativ um eine parallel zu der X-Richtung verlaufende Schwenkachse verschwenkbar sein, also eine a-Achse ausbilden. Hierdurch können vergleichsweise stärker gekrümmte dreidimensionale Fasergelege 3 hergestellt werden.

Der Legekopf 26 ist entlang der z-Richtung mittels des z-Schlittens 31 um mindestens 200 mm, insbesondere um mindestens 400 mm, und besonders bevorzugt um mindestens 600 mm linear verfahrbar. Zur Herstellung von dreidimensionalen Fasergelegen 3 ist eine Steuereinheit 34 der Faserlegemaschine 2 derart ausgebildet, dass der Faserlegekopf 26 während des Legens von Fasern 13 mittels des z-Schlittens 31 über seinen Hub um mindestens 50 mm, insbesondere um mindestens 100 mm, und insbesondere um mindestens 150 mm linear verfahrbar ist.

Zum Verfahren des Werkzeugtischs 23 entlang der x-Richtung sind unterhalb der Querträger 17, 18 und zwischen den jeweils zugehörigen Längsstützen 19 Durchfahröffnungen 35, 36 für den Werkzeugtisch 23 ausgebildet. Zum automatischen Beladen des Werkzeugtisclis 23 mit Paletten 14 ist an der Beladeseite 8 eine erste Paletten-Handhabungseinheit 37 angeordnet, wohingegen zum automatischen Entladen von Formwerkzeug-Paletten 14 von dem Werkzeugtisch 23 an der Entladeseite 10 eine zweite Paletten-Handhabungseinheit 38 angeordnet ist. Die Handhabungseinheiten 37, 38 sind entlang der x-Richtung endseitig an dem Maschinenbett 16 befestigt. Die Paletten-Handhabungseinheiten 37, 38 sind als Hubeinheiten ausgebildet, die zum Anheben und Absenken von Paletten 14 dienen.

Hierzu weisen die Paletten-Handhabungseinheiten 37, 38 mindestens drei, insbesondere mindestens vier Hubelemente 39 auf. Die Hubelemente 39 weisen einen Kolben 40 auf, der in einem zugehörigen Zylinder 41 entlang der z-Richtung verlagerbar ist. Die Hubelemente 39 sind elektromechanisch, pneumatisch oder hydraulisch betätigbar. Insbesondere werden die zu der jeweiligen Paletten-Handhabungseinheit 37, 38 gehörigen Hubelemente 39 mittels der Steuereinheit 34 synchron betätigt, um eine Formwerkzeug-Palette 14 anzuheben oder abzusenken.

Die Faserlegemaschine 2 weist zum Bereitstellen der zu legenden Fasern 13 eine Faser-Bereitstellungseinheit 42 auf. Die Faser-Bereitstellungseinheit 42 weist zwei Faserspulenlager 43, 44 auf, wobei ein erstes Faserspulenlager 43 in der x-Richtung neben dem ersten Querträger 17 und ein zweites Faserspulenlager 44 neben dem zweiten Querträger 18 angeordnet ist. Die Faserspulenlager 43, 44 sind in der y-Richtung endseitig an dem Maschinenbett 16 befestigt. Die Faserspulenlager 43, 44 weisen jeweils mehrere Faserspulenhalter 45 für Faserspulen 46 auf. Die Faserspulen 46 sind an einem jeweiligen Faserspulenhalter 45 angeordnet und um eine jeweilige horizontale Drehachse 47 drehbar gelagert. Die jeweilige horizontale Drehachse 47 verläuft parallel zu der y-Richtung.

Von den Faserspulen werden die Fasern 13 jeweils in Form eines Faserstrangs zu dem Legekopf 26 geführt. An dem Legekopf werden die einzelnen Faserstränge zu einer Faserbahn zusammengeführt und homogenisiert, bevor die Faserbahn auf das Werkstück aufgebracht wird.

Die Drehachsen 47 der Faserspulenhalter sind vorliegend mit einem Antrieb ausgestattet, so dass die Spulen auf entgegen einer Abspulrichtung angetriebenen Achsen 47 sitzen, wobei die Antriebe der Achsen 47 eine Drehmomentbegrenzung aufweisen. Die Drehmomentbegrenzung kann zum Beispiel durch eine Reibkupplung oder auch durch eine drehmomentabhängige Ansteuerung eines elektrischen Antriebs erfolgen. Auf diese Weise kann der jeweilige Faserstrang bei Bedarf, insbesondere während des Abspulens, in einer definierten Vorspannung gehalten werden.

Die Fasern bzw. Faserstränge 13 sind über Führungselemente 50 in Form von Führungsrollen einem jeweiligen Tänzermagazin 48, 49 zuführbar, das zur Kompensation von Änderungen einer auf die Fasern 13 wirkenden Zugspannung dient. Das jeweilige Tänzermagazin 48, 49 weist Umlenkelemente 51 in Form von Umlenkrollen auf, die entlang der z-Richtung verlagerbar sind und mittels Gewichten die Fasern 13 vorspannen. Die Umlenkelemente 51 werden auch als Tänzer bezeichnet. Durch die Verlagerung der Umlenkelemente 51 sind dynamische Effekte kompensierbar, die einerseits durch die Trägheit der Faserspulen 46 hervorgerufen sind und andererseits durch ein ungleichmäßiges Fördern der Fasern 13 im Falle des Schneidens einzelner Fasern 13 während des Ablegens von Fasern 13 bedingt sind. Die Fasern 13 sind über Führungselemente 53 in Form von Führungsrollen umlenkbar und aus dem jeweiligen Faserspulenlager 43, 44 führbar. Die Position der Umlenkelemente 51 wird im Betrieb der Tänzermagazine 48, 49 geregelt. Hierzu dienen Sensoren 52, die die Auslenkung in z-Richtung der Umlenkelemente 51 ermitteln. Die Auslenkung in z-Richtung wird um eine Sollposition geregelt, indem die Faserspulenhalter 45 mit einer regelbaren Bremse ausgestattet sind. Bevorzugt handelt es sich bei der Bremse um einen entgegen der Wickelrichtung wirkenden, drehmomentbegrenzten Antrieb.

Die Fasern 13 treten aus den Faserspulenlagern 43, 44 in der x-Richtung aus und werden durch vertikal angeordnete Umlenkelemente 54, die eine vertikale Umlenkachse ausbilden, in die y-Richtung umgelenkt. Die Umlenkelemente 54 sind als Umlenkrollen ausgebildet. Die Umlenkelemente 54 sind an einem Traggestell 55 gelagert, das zwischen den Faserspulenlagern 43, 44 befestigt ist. An einer dem Legekopf 26 und den Faserspulenlagern 43, 44 abgewandten Seite des y-Schlittens 28 sind horizontale Umlenkelemente 56 in Form von Umlenkrollen angeordnet, die die Fasern 13 zunächst von der γ-Richtung in die z-Richtung und anschließend von der z-Richtung wieder in die γ-Richtung umlenken. Die Umlenkelemente 56 bilden horizontale Umlenkachsen aus. Zwischen dem y-Schlitten 28 und den Faserspulenlagern 43, 44 sind oberhalb des z-Schlittens 31 weitere horizontale Umlenkelemente 57 angeordnet. Die Umlenkelemente 57 bilden horizontale Umlenkachsen aus und lenken die Fasern 13 von der y-Richtung in die z-Richtung zu dem Legekopf 26 um. Die Umlenkelemente 57 sind als Umlenkrollen ausgebildet.

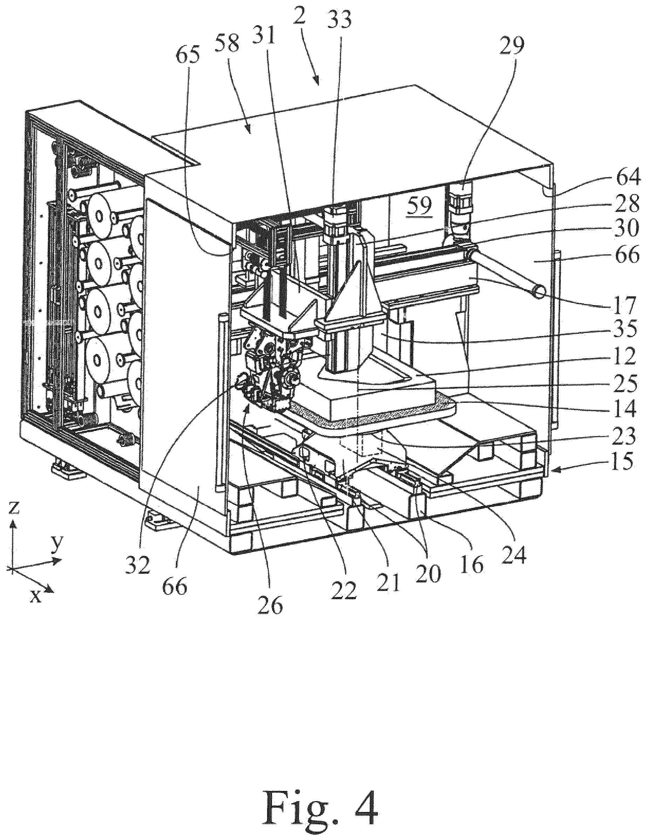

Die Faserlegemaschine 2 weist ein Maschinengehäuse 58 auf, das lediglich in den Fig. 3 und 4 dargestellt ist. Das Maschinengehäuse 58 begrenzt einen Innenraum 59, in dem die Längsstützen 19 mit den Querträgem 17, 18, der y-Schlitten 28, der z-Schlitten 31 und der Faserlegekopf 26 angeordnet sind. Das Maschinengehäuse 58 weist zur Beladeseite 8 hin eine erste Gehäuseöffnung 60 und zur Entladeseite 10 hin eine zweite Gehäuseöffnung 60, 61 auf, die durch jeweilige Abdeckelemente 62 dicht verschlossen und geöffnet werden können. Die Gehäuseöffnungen 60, 61 und die zugehörigen Abdeckelemente 62 sind in Fig. 3 lediglich skizziert. Die Abdeckelemente 62 sind beispielsweise als Türen oder Gliederschürzen ausgebildet.

Zur Klimatisierung des Innenraums 59 weist die Faserlegemaschine 2 eine Klimatisierungseinheit 63 auf, die auf dem Maschinenbett 16 angeordnet ist. Insgesamt ist hierdurch ein bevorzugtes klimatisch geschlossenes Gehäuse 58 ausgebildet.

Zum Betreten des Innenraums 59 sind zwei weitere Gehäuseöffnungen 64, 65 in dem Maschinengehäuse 58 ausgebildet, die zwischen den jeweils benachbarten Längsstützen 19 in den Innenraum 59 münden. Die Gehäuseöffnungen 64, 65 sind mittels Türen 66 verschließbar.

Die Betriebsweise des Systems zur Herstellung von Faserverbundbauteilen 1 und der Faserlegemaschine 2 ist wie folgt:
Die Faserlegemaschinen 2 werden mittels der Fördereinrichtung 4, 5 automatisch mit Paletten 14 beladen, auf denen zu belegende Werkstücke 12 angeordnet sind. Hierzu verfährt der mindestens eine Förderschlitten 4 von der Aufnahmestelle 7 auf dem Beladeabschnitt 6 der Führung 5 bis zu der jeweiligen Beladeseite 8 der Faserlegemaschinen 2.

Das Beladen erfolgt derart, dass die Fördereinrichtung 4, 5 die Palette 14 der ersten Paletten-Handhabungseinheit 37 zuführt. Die erste Paletten-Handhabungseinheit 37 befindet sich vorzugsweise in einer angehobenen Position. Sofern sich die erste Paletten-Handhabungseinheit 37 nicht in einer angehobenen Position befindet, so wird diese vor oder nach dem Beladen in eine angehobene Position überführt. Das Beladen der jeweiligen Faserlegemaschine 2 erfolgt zeitlich parallel zum Legen von Fasern 13 und/oder zum Entladen des Werkzeugtischs 23.

Während die erste Paletten-Handhabungseinheit 37 an der Beladeseite 8 ein zu belegendes Werkstück 12 bereitstellt, wird mittels des Legekopfes 26 ein Fasergelege 3 hergestellt. Hierzu ist eine Palette 14 mit einem darauf angeordneten Werkstück 12 auf dem Werkzeugtisch 23 mittels der Spanneinheiten 27 gespannt. Der Werkzeugtisch 23 wird während dem Faserlegen mittels des X-Schlittens 21 entlang der x-Richtung linear verfahren und zum Erzielen einer gewünschten Faserorientierung mittels des c-Antriebsmotors 24 um die Schwenkachse 25 verschwenkt. Weiterhin verfährt der Legekopf 26 beim Faserlegen mittels des y-Schlittens 28 entlang der y-Richtung und mittels des z-Schlittens 31 entlang der z-Richtung.

Durch Verfahren des Legekopfes 26 in der z-Richtung ist bei Bedarf auch ein dreidimensionales Fasergelege 3 herstellbar.

Nach der Fertigstellung des Fasergeleges 3 wird der x-Schlitten 21 in der x-Richtung zu der Entladeseite 10 verfahren. Dort befindet sich die zweite Paletten-Handhabungseinheit 38 in einer abgesenkten Position. Zum automatischen Entladen der Palette 14 wird diese mittels der Spanneinheiten 27 von dem Werkzeugtisch 23 gelöst. Anschließend werden die Hubelemente 39 der zweiten Paletten-Handhabungseinheit 38 von der abgesenkten in die angehobene Position überführt, so dass die Palette 14 mit dem fertig belegten Werkstück 12 automatisch von dem Werkzeugtisch 23 entladen wird.

Anschließend verfährt der x-Schlitten 21 von der Entladeseite 10 zu der Beladeseite 8, wo die erste Paletten-Handhabungseinheit 37 in der angehobenen Position die nächste Palette 14 bereithält. Befindet sich der Werkzeugtisch 23 unterhalb der Palette 14, werden die Hubelemente 39 der ersten Paletten-Handhabungseinheit 37 von der angehobenen in die abgesenkte Position überführt, wodurch die Palette 14 auf dem Werkzeugtisch 23 angeordnet wird. Die Palette 14 wird anschließend mittels der Spanneinheiten 27 auf dem Werkzeugtisch 23 gespannt. Der Werkzeugtisch 23 wird nun für den nächsten Faserlegevorgang in der x-Richtung zu dem Legekopf 26 verfahren, so dass dieser mit dem neuen Faserlegevorgang beginnen kann.

Die Hubelemente 39 der ersten Paletten-Handhabungseinheit 37 werden für ein neues Beladen wieder in die angehobene Position überführt. Das automatische Entladen der Faserlegemaschine 2 erfolgt mittels der Fördereinrichtung 4, 5 die von der jeweiligen Entladeseite 10 zu der Ablegestelle 11 führt. Das Entladen der jeweiligen Faserlegemaschine 2 erfolgt zeitlich parallel zu dem Beladen des Werkzeugtischs 23 mit einer Palette 14 und einem darauf angeordneten und zu belegenden Werkstück 12 und/oder zum Belegen des Werkstücks 12 mit Fasern 13. Zum Entladen übernimmt der Förderschlitten 4 die Palette 14 und das darauf angeordnete Werkstück 12 von der zweiten Paletten-Handhabungseinheit 38 und verfährt von der jeweiligen Entladeseite 10 auf dem Entladeabschnitt 9 der Führung 5 zu der Ablegestelle 11. Die Hubelemente 39 der zweiten Paletten-Handhabungseinheit 38 werden nach dem Entladen in die abgesenkte Position überführt, so dass der Werkzeugtisch 23 wieder entladen werden kann.

Die Gehäuseöffnungen 60, 61 des klimatisierten Maschinengehäuses 58 sind überwiegend mittels der Abdeckelemente 62 verschlossen und werden nur geöffnet, wenn der Werkzeugtisch 23 von der Beladeseite 8 zu dem Legekopf 26 oder von dem Legekopf 26 zu der Entladeseite 10 oder von der Entladeseite 10 zu der Beladeseite 8 verfahren wird.

Das Legen der Fasern 13 erfolgt unidirektional, wenn der Legekopf 26 in der y-Richtung zu den Faserspulenlagern 43, 44 hin verfahren wird. Bei diesem Verfahrvorgang verkürzt sich der Abstand zwischen den vertikalen Umlenkelementen 54 und den horizontalen Umlenkelementen 56, so dass während des Faserlegevorgangs keine Fasern 13 aus den Faserspulenlagern 43, 44 gezogen werden müssen. Hierdurch kann das Faserlegen vergleichsweise schnell erfolgen. Bei dem Rückwärtsverfahren des Faserlegekopfes 26 von den Faserspulenlagern 43, 44 weg werden dann die Fasern 13 für den nächsten Faserlegevorgang aus den Faserspulenlagern 43, 44 gezogen. Änderungen in der Zugspannung der Fasern 13 werden mittels der Tänzermagazine 48, 49 ausgeglichen.

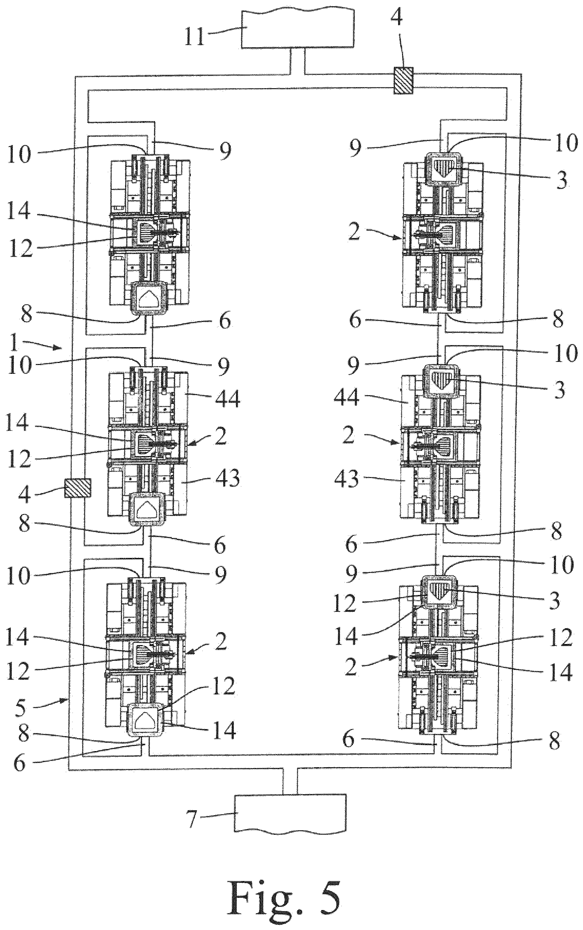

Nachfolgend ist anhand von Fig. 5 ein zweites Ausführungsbeispiel beschrieben. Im Unterschied zu dem ersten Ausführungsbeispiel sind die Faserlegemaschinen 2 in zwei Gruppen in Reihe zueinander angeordnet. Die Führung 5 ist derart ausgebildet, dass die Förderschlitten 4 über einen jeweiligen Beladeabschnitt 6 und einen jeweiligen Entladeabschnitt 9 zu der Beladeseite 8 und der Entladeseite 10 jeder der Faserlegemaschinen 2 verfahrbar sind. Die Faserspulenlager 43, 44 der jeweiligen Faserlegemaschine 2 sind zu einem Zwischenraum 67 hin angeordnet. Der Zwischenraum 67 wird durch die zwei Reihen von Faserlegemaschinen 2 gebildet. In dem Zwischenraum 67 ist beispielsweise ein Vorratslager mit Faserspulen 46 angeordnet, um die Faserspulenlager 43, 44 neu zu bestücken. Hinsichtlich des weiteren Aufbaus und der weiteren Funktionsweise des Systems 1 und der Faserlegemaschinen 2 wird auf das vorangegangene Ausführungsbeispiel verwiesen.

Allgemein gilt Folgendes: Die Faserlegemaschinen 2 ermöglichen das Legen von Faserstacks aus Tow-Preg-Material und/oder Slit-Tow-Material und/oder trockenen Fasern 13, die mit einem Binder versehen sein können. Für sämtliche Ausführungsbeispiele bevorzugt sind die Fasern 13 im Sinne der Erfindung bereits in der Faser-Bereitstellungseinheit mit einem Bindemittel vorbeschichtet.

Die Fasern 13 sind vorzugsweise Kohlenstofffasern und/oder Glasfasern.

Die Fasergelege 3 können mit einer beliebigen Faserorientierung und/oder Kontur hergestellt werden. Die Faserlegemaschinen 2 funktionieren autark.

Zum Be- und Entladen der Faserlegemaschinen 2 kann das System zur Herstellung von Faserverbundteilen eine übergeordnete Steuereinrichtung aufweisen. Die Faserlegemaschinen 2 sind zur Erzielung einer hohen Produktivität insbesondere in eine Taktstraße eingebunden. Die jeweilige Faserlegemaschine 2 ist bevorzugt vierachsig ausgebildet.

Falls der Faserlegekopf 26 um eine zusätzliche a-Achse verschwenkbar ausgebildet ist (nicht dargestellt), ist die jeweilige Faserlegemaschine 2 fünfachsig ausgebildet.

Mit der jeweiligen Faserlegemaschine 2 können sowohl zweidimensionale als auch dreidimensionale Fasergelege 3 hergestellt werden. Der Legekopf 26 ist in zwei Achsen linear verfahrbar. Insbesondere ist der Legekopf 26 ausschließlich in zwei Achsen linear verfahrbar, nämlich in einer horizontalen y-Achse und einer vertikalen z-Achse. Die Bewegung des Legekopfes erfolgt daher in genau einer Ebene, welche hier von der y-Achse und von der z-Achse aufgespannt wird.

Der Werkzeugtisch 23 ist in einer Achse linear verfahrbar und um die Schwenkachse 25 verschwenkbar. Insbesondere ist der Werkzeugtisch 23 ausschließlich in einer x-Achse linear verfahrbar und um eine vertikale z-Achse 25 verschwenkbar. Diese Achskombination erlaubt eine einfache, flexible und effiziente Herstellung von zweidimensionalen und dreidimensionalen Fasergelegen 3 mit beliebiger Faserorientierung und/oder Kontur.

Das Beladen der Faserlegemaschine 2 und/oder des Werkzeugtischs 23 erfolgt automatisch. Hierzu sind die Fördereinrichtung 4, 5 und die Paletten-Handhabungseinheit 37 vorgesehen.

Entsprechend erfolgt das Entladen des Werkzeugtischs 23 und/oder der Faserlegemaschine 2 automatisch. Hierzu sind die Paletten-Handhabungseinheit 38 und die Fördereinrichtung 4, 5 vorgesehen. Die Fördereinrichtung kann auch derart ausgebildet sein, dass mittels der Führung selbst die Werkstücke 12 bzw. die Paletten 14 verfahrbar sind. Hierzu bildet die Führung beispielsweise einen Rollenförderer oder Bandförderer aus. Förderschlitten sind dann nicht erforderlich. Die Paletten-Handhabungseinheiten 37, 38 sind beispielsweise ein Palettenwechsler. Die Faserlegemaschine 2 ist zum Be- und Entladen von zwei gegenüberliegenden Seiten zugänglich. Insbesondere können Paletten 14 durch die Faserlegemaschine 2 durchgeladen werden. Durch die Fördereinrichtung 4, 5 ist die Faserlegemaschine 2 geeignet, in Taktstraßen integriert zu werden.

Mit der Faserlegemaschine 2 können beispielsweise Fasergelege 3 mit einer Größe von 1500 mm x 1500 mm x 100 mm hergestellt werden. Derartige Fasergelege 3 werden beispielsweise in der Automobilindustrie eingesetzt. Die Erfindung ist auf Fasergelege der beispielhaft genannten Größe nicht beschränkt.

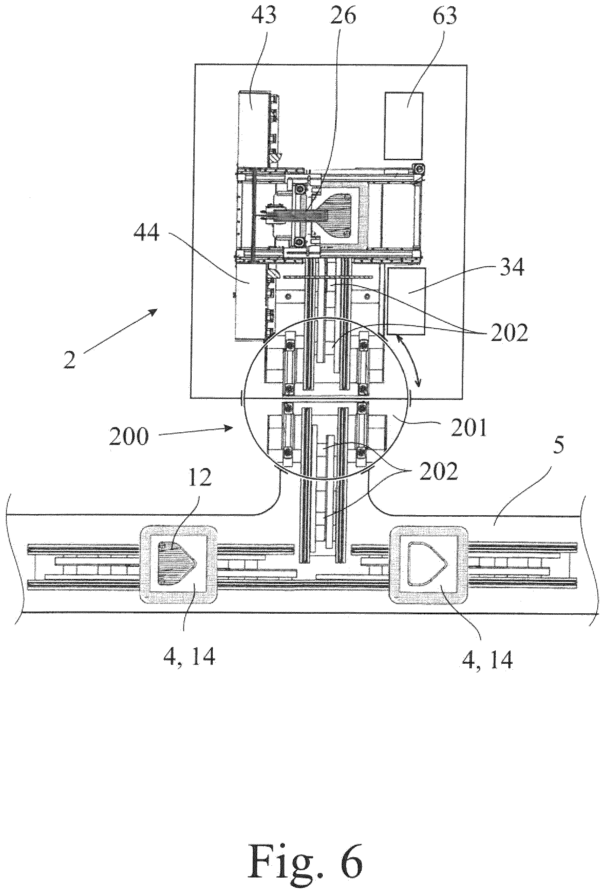

Bei einer weiteren bevorzugten Ausführungsform gemäß Fig. 6 ist eine erfindungsgemäße Faserlegemaschine über eine Ladevorrichtung 200 mit der automatisierten Fördereinrichtung 4, 5 verbunden, mittels der eine Beladung und Entladung der Faserlegeanlage von nur einer Seite ermöglicht ist. Die Ladevorrichtung 200 bildet dabei einen T-förmigen Abzweig in der Fördereinrichtung 4, 5, so dass eine Palette 14 mit dem Werkstück 12 nach Art einer Sackgasse von dem Abzweig in die Faserlegemaschine hinein und aus dieser heraus bewegt werden kann.

Dabei erfolgt der Transport zwischen einem äußeren Teil der Fördereinrichtung 4, 5 und einer Bearbeitungsposition in der Faserlegemaschine über einen zumindest teilweise innerhalb der Faserlegemaschine verlaufenden Ladeweg 202. Der Ladeweg 202 kann in seiner technischen Realisierung zum Beispiel der vorstehend beschriebenen Führung des Werkzeugtisches entlang der x-Achse entsprechen. Vorliegend zweigt der Ladeweg 202 im rechten Winkel von der Fördereinrichtung 4, 5 ab, jedoch können auch andere Winkel vorgesehen sein. Der Ladeweg 202 kann bei einer allgemeinen Ausführungsform auch als lineare Fortsetzung eines äußeren Teils der Fördereinrichtung angeordnet sein.

Die Ladevorrichtung 200 ist im Einzelnen als Drehwechseleinrichtung ausgebildet, die eine drehbare Halterung 201 zur Aufnahme von zumindest zwei Werkstücken 12 umfasst. Die Werkstücke 12 sind dabei jeweils auf ihrer Palette 14 angeordnet. Die drehbare Halterung 201 ist nach Art eines Drehtellers in einer im Wesentlichen waagerechten Ebene drehbar. Dabei kann die drehbare Halterung zur Steigerung des Durchsatzes zugleich mit einem unbearbeiteten Werkstück 12 seitens der äußeren Fördereinrichtung 4, 5 sowie mit einem bearbeiteten Werkstück aus der Faserlegemaschine beladen werden. Nachfolgend wird die Halterung um 180 Grad gedreht. Danach kann das bearbeitete Werkstück mit der Fördereinrichtung 4, 5 weiter transportiert werden, und das unbearbeitete Werkstück kann über den Ladeweg 202 in die Faserlegemaschine 2 verfahren werden.

Es versteht sich, dass die drehbare Halterung ja nach Anforderungen auch in Kombination mit einer beidseitig beschickbaren Faserlegemaschine 2, wie sie vorstehend beschrieben und in Fig. 1 bis Fig. 5 gezeigt ist, vorliegen kann.

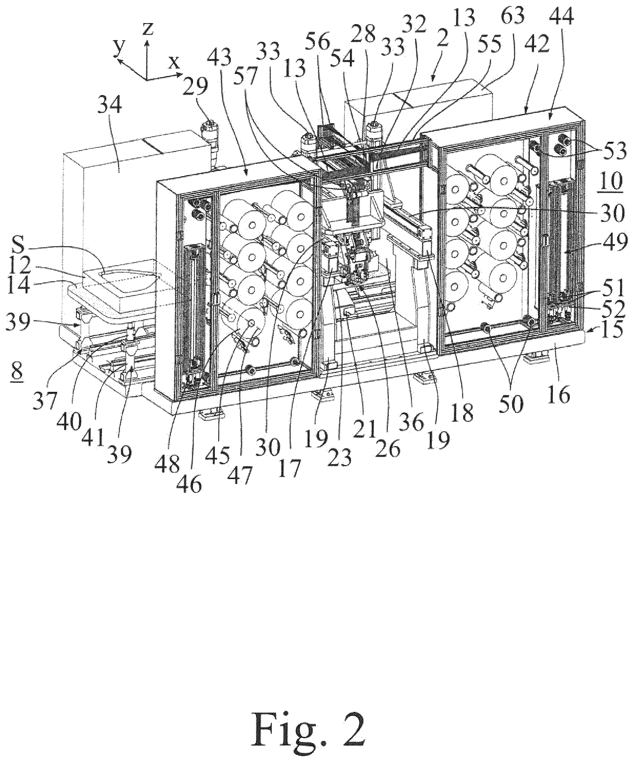

Die in Fig. 6 gezeigte Faserlegemaschine umfasst vorzugsweise wie vorstehend zu Fig. 2 bis Fig. 4 beschrieben den Legekopf 26, der in genau einer, senkrecht angeordneten Ebene bewegbar ist. Der Legekopf 26 wird von zwei Faserspulenlagern 43, 44 versorgt. Als weitere Komponenten sind die elektrische Steuerungseinheit 34 und die Klimatisierungseinheit 63 in ihrer Position schematisch dargestellt. Vorliegend verläuft der Ladeweg 202 in rechtem Winkel von 90° zu der senkrecht angeordneten Ebene der Bewegung des Legekopfes. Die Spulenachsen bzw. Drehachsen der Faserspulen 47 verlaufen parallel zu der senkrecht angeordneten Ebene.

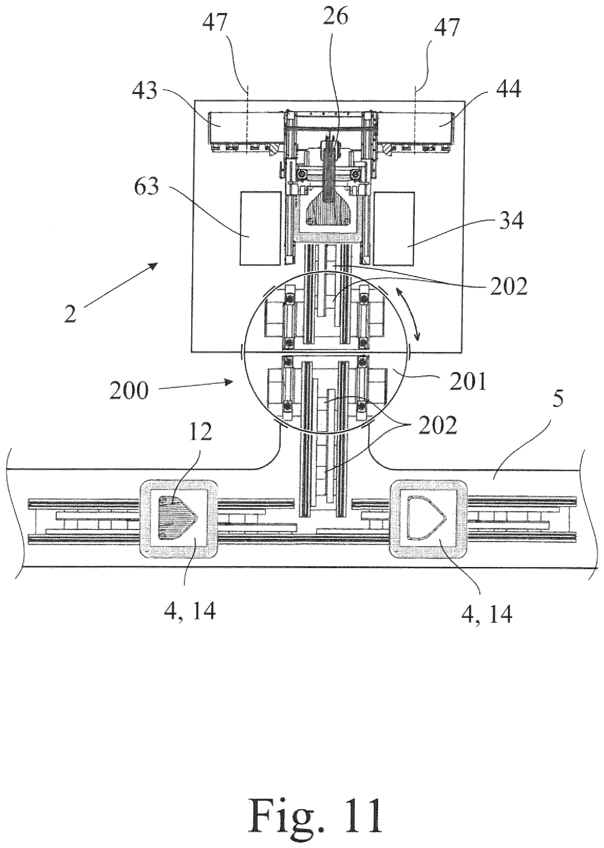

Bei der in Fig. 11 gezeigten, ersten Abwandlung wurde der Werkzeugtisch so modifiziert, dass der Ladeweg 202 parallel zu der der senkrecht angeordneten Ebene verläuft, in der sich der Legekopf 26 bewegt. Insbesondere verläuft eine Mittelachse des Ladeweges 202 in der senkrecht angeordneten Ebene. Die Anordnung der Faserspulenlager 43, 44 sowie der Steuerungseinheit 34 und der Klimatisierungseinheit 63 sind entsprechend relativ zu dem Legekopf gleich geblieben, wurden aber zusammen mit dem Legekopf relativ zu der automatisierten Fördereinrichtung 4, 5 um 90° gedreht.

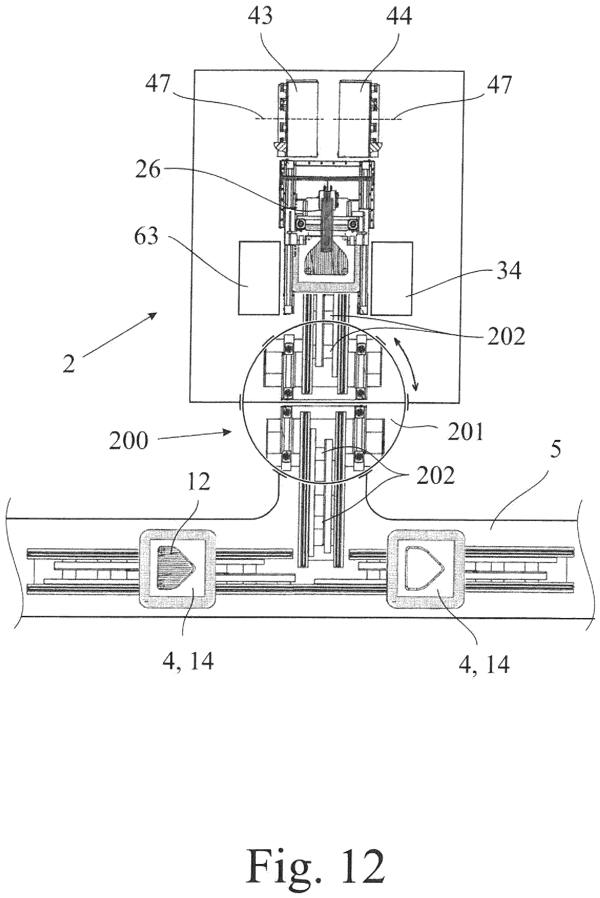

Bei der in Fig. 12 gezeigten, zweiten Abwandlung wurden zusätzlich zu den Änderungen in Fig. 11 die Faserspulenlager 43, 44 relativ zu dem Legekopf 26 um 90° gedreht. Hierdurch verlaufen die Spulenachsen 47 nunmehr im Winkel von 90° zu der senkrecht angeordneten Ebene. Entsprechend können die Faserspulenlager 43, 44 im Wesentlichen in einer Linie mit dem Legekopf 26 und mit dem Ladeweg 202 angeordnet werden. Dies erlaubt eine besonders schmale Bauweise der Faserlegemaschine 2.

Allgemein können die genannten Komponenten der Faserlegemaschine, nämlich die mehreren Faserspulenlager 43, 44, die Klimatisierungseinheit 63 und die elektrische Steuerungeinheit 34, auf beliebige Weise relativ zu dem Legekopf 26 und/oder dem Ladeweg 202 angeordnet werden. Hierdurch können für die Faserlegemaschine 2 eine äußere Abmessung, eine Umrissform, die Position eines Wartungszugangs oder Ähnliches an eine jeweilige Anforderung angepasst werden.

Bei dem in Fig. 1 bis Fig. 6 gezeigten System sind die Faserlegemaschinen 2 bevorzugt mit wenigstens einer weiteren Bearbeitungsstation (nicht dargestellt) zur Modifizierung des Werkstücks 12 kombiniert, die von der vorstehend beschriebenen Faserlegemaschine 2 verschieden ist. Dabei kann es sich sowohl um eine Faserlegemaschine anderer Bauart handeln als auch um eine Bearbeitungsstation, die nicht zur Verlegung von Fasern auf dem Werkstück ausgebildet ist. Die weitere Bearbeitungsstation ist dabei mittels der automatisierten Fördereinrichtung 4, 5 mit der Faserlegemaschine 2 verbunden.

Insbesondere kann es sich bei der weiteren Bearbeitungsstation um eine Umformvorrichtung, insbesondere eine Pressvorrichtung, handeln, mittels der das Werkstück 12 in einem dem Aufbringen der Fasern 13 nachfolgenden Arbeitsschritt umgeformt bzw. gepresst wird.

Alternativ oder ergänzend ist die weitere Bearbeitungsstation eine Temperaturkammer und/oder eine Lackiervorrichtung. Es kann sich auch um eine sonstige Bearbeitungsstation handeln, die insbesondere bei einer automatisierten Fertigung von Flugzeugbauteilen oder von Automobilbauteilen Anwendung findet.

Bei der in Fig. 1 exemplarisch gezeigten Ausführungsform ist insbesondere eine parallele Bearbeitung von mehreren Werkstücken 12 auf ihren jeweiligen Paletten 14 begünstigt. Dabei umfasst das System mehrere baugleiche Faserlegemaschinen 2, die räumlich voneinander separiert und mittels der automatisierten Fördereinrichtung 4, 5 verbunden sind. Die an den Werkstücken 12 vorgenommenen Modifizierungen sind dabei jeweils identisch.

Bei der in Fig. 5 exemplarisch gezeigten Ausführungsform ist insbesondere begünstigt, dass mehrere Faserlegemaschinen 2 als sequentielle Bearbeitungsstationen nacheinander verschiedene Bearbeitungsschritte an einem Werkstück 12 durchführen. Die gezeigte Anordnung kann durch geeignete Steuerung der Förderreinrichtung 4, 5 zum Beispiel als zwei parallele, zwischen Entnahmestelle 7 und Ablegestelle 11 angeordnete Reihen von jeweils drei sequentiell nacheinander angeordneten Faserlegemaschinen 2 betrieben werden. In einer jeweiligen Reihe können dann drei verschiedene Bearbeitungsschritte an demselben Werkstück 12 hintereinander vorgenommen werden. Hierzu können auch verschieden aufgebaute Faserlegemaschinen in der jeweiligen Reihe angeordnet sein. Auch eine Kombination mit einer von einer Faserlegemaschine verschiedenen Bearbeitungsstation in einer Reihe ist möglich.

Die Entnahmestelle 7 und/oder die Ablegestelle 11 können jeweils als eine Pufferstation zur Aufnahme, Speicherung und Weitergabe mehrerer Werkstücke 12 ausgebildet sein. Auf diese Weise bilden die Pufferstationen 11, 12 einen Zwischenspeicher für die Werkstücke 12 auf ihren Paletten 14, wodurch eine Einbindung in eine automatisierte Gesamtfertigung mit entsprechenden Taktraten verbessert ist.

Nachfolgend wird ein erfindungsgemäßer Legekopf 26, der in einer vorstehend beschriebenen Faserlegemaschine verwendet wird, genauer erläutert.

Der Legekopf 26 ist als wechselbares Modul an der weiteren Faserlegemaschine 2 angeordnet. Wie vorstehend beschrieben, kann der Legekopf 26 in der y-Richtung, nachfolgend auch Verlegerichtung genannt, bewegt werden. Zudem kann der Legekopf 26 in der dazu senkrechten z-Richtung bewegt werden, um auf dem Werkstück aufgesetzt oder von ihm abgehoben zu werden. Insgesamt bewegt sich der Legekopf 26 daher in genau einer Ebene, die von der y-Achse und der z-Achse aufgespannt wird.

Der Legekopf hat zwei gewinkelt zueinander verlaufende Zuführungen 101, 102, wobei mittels der ersten Zuführung 101 eine erste Gruppe von Fasersträngen 13 und mittels der zweiten der Zuführung 102 eine zweite Gruppe von Fasersträngen 13 in einen Kreuzungsbereich 103 geführt werden, um die beiden Gruppen von Fasersträngen 13 zu einer Faserbahn zu vereinigen. Vorliegend umfasst jede Gruppe acht Faserstränge, so dass insgesamt 16 Faserstränge 13 zu einer Faserbahn vereinigt werden.

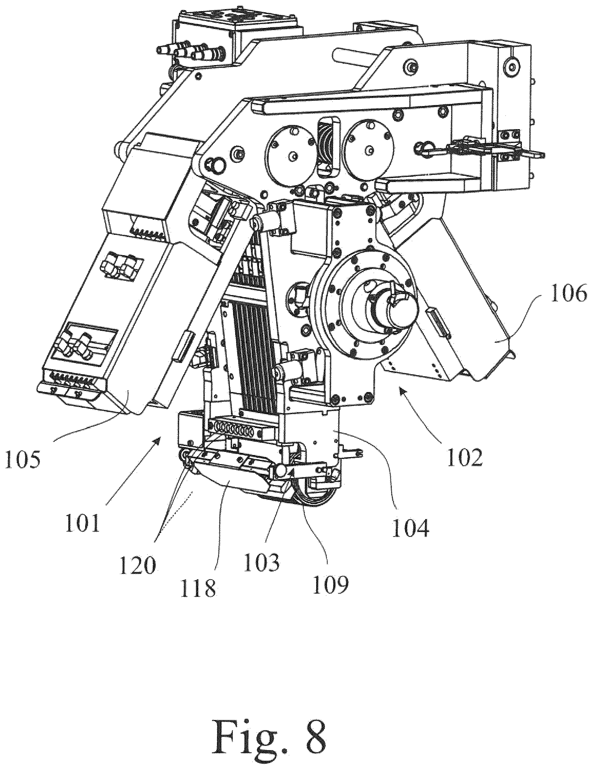

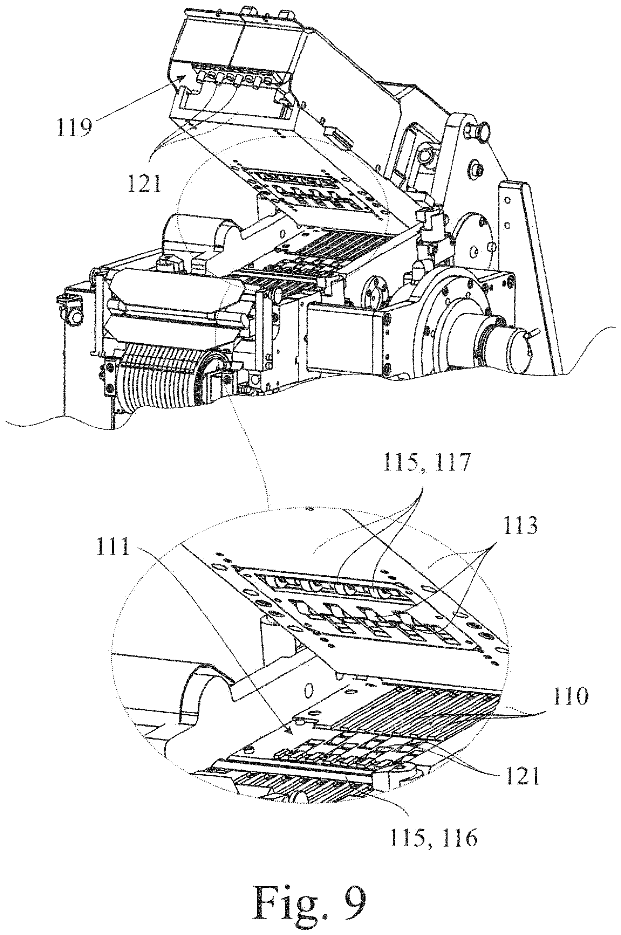

Die Zuführungen 101, 102 verlaufen in einem spitzen Winkel von etwa 15° zueinander, so dass ein zentraler Bereich 104 des Legekopfes 26 etwa keilförmig ausgeformt ist. Auf jeder Seite des keilförmigen Bereichs 104 ist jeweils ein ablösbares Oberteil 105, 106 angeordnet. Die Oberteile 105, 106 sind zu Wartungszwecken gegenüber dem zentralen Bereich aufschwenkbar (siehe Fig. 8, Fig. 9) und abnehmbar.

Die beiden Gruppen von Fasersträngen 13 werden eingangsseitig des Legekopfes über Rollenführungen 107, 108 auf die beiden Zuführungen 101, 102 verteilt. In jeder der Zuführungen 101, 102 wird auf gleiche Weise mit der Gruppe aus Fasersträngen 13 verfahren, so dass der Legekopf bezüglich der beiden Zuführungen 101, 102 im Wesentlichen symmetrisch aufgebaut ist.

Die Faserstränge der beiden Gruppen sind in Querrichtung bzw. senkrecht zu der Bewegungsebene des Legekopfes um eine Strangbreite versetzt geführt, so dass in dem Kreuzungsbereich 103 in der Querrichtung immer abwechselnd ein Faserstrang 13 der ersten Gruppe und ein Faserstrang 13 der zweiten Gruppe in das resultierende Faserband geführt werden.

Unmitelbar nach dieser Zusammenführung läuft das Faserband über eine endseitig des Legekopfes angeordnete Kompaktierungsrolle 109, mittels der das Faserband beim Ablegen auf dem Werkstück 12 angedrückt wird.

Der Kreuzungsbereich 1 03 und die Kompaktierangsrolle 1 09 werden mittels einer Heizvorrichtung 118 in Form eines Wärmestrahlers erwärmt, so dass ein vorbeschichteter Binder der Fasern aktiviert wird.

Auf die Faserstränge 13 wird in den Zuführungen 101, 102 dabei jeweils wie nachfolgend beschrieben eingewirkt:
Die Faserstränge 13 einer Zuführung laufen in parallelen Führungsnuten 110, die auf der Seite des zentralen Bereichs 104 angeordnet sind. In Förderrichtung überqueren die Faserstränge zunächst eine Klemmvorrichtung 111, mittels der die Faserstränge 13auf kontrollierte Weise festklemmbar und wieder lösbar sind. Die Klemmvorrichtung umfasst für jeden der Faserstränge 13 eine untere, an dem zentralen Bereich angeordnete Klemmrolle 112 und eine obere, an dem Oberteil angeordnete Klemmrolle 113. Für jeden der Faserstränge ist somit ein miteinander zusammenwirkendes Paar von Klemmrollen 112, 113 vorgesehen, zwischen denen der Faserstrang einklemmbar ist.

Die jeweils an dem Oberteil angeordneten Klemmrollen 113 sind zum Zweck der lösbaren Klemmung mit einem Aktuator 114 verbunden, durch den die obere Klemmrolle 113 gegen den Faserstrang 13 und die untere Klemmrolle 112 gedrückt werden kann.

Die Klemmrollenpaare 112, 113 sind zudem mit einem Freilauf in Förderrichtung der Faserstränge 13 versehen, so dass auch im geklemmten Zustand nur eine Klemmwirkung entgegen der Förderrichtung vorliegt.

Eine Vorförderrolle 115 ist in Förderrichtung hinter der Klemmvorrichtung 111 angeordnet. Mittels der Vorförderrolle 115 können die Faserstränge angetrieben in der Förderrichtung vorgeschoben werden. Die Vorförderrolle ist zwischen der Klemmvorrichtung 111 und der austrittsseitigen Kompaktierungsrolle 109 des Legekopfes 26 angeordnet.

Die Vorförderrolle 115 ist vorliegend als Paare von zwei zusammenwirkenden, über die gesamte Breite der Gruppe von Fasersträngen 13 verteilte Rollen 116, 117 ausgebildet. Die Vorförderrolle ist mittels eines Drehantriebs angetrieben.

Eine Schneidvorrichtung 119 ist an dem Legekopf zwischen der Vorförderrolle 115 und der austrittseitigen Kompaktierungsrolle 109 angeordnet. Die Fasern bzw. die Gruppe von Fasersträngen 13 sind mittels der Schneidvorrichtung abtrennbar. Hierzu umfasst die Schneidvorrichtung 119 eine Mehrzahl von separat ansteuerbaren Schneidgliedern 120, die quer zu der Verlegerichtung verschiedene Teile der Fasern abtrennen können. Vorliegend ist für jeden der acht Faserstränge 13 einer Gruppe ein jeweils separat ansteuerbares Schneidglied 120 vorgesehen. Eine entsprechende separate Ansteuerung der Schneidglieder erlaubt eine gewünschte Formgebung eines Ende bzw. Anfangs der verlegten Faserbahn.

Die Schneidvorrichtung 119 umfasst zudem ein Aktuatorglied 121 mit acht einzelnen Aktuatoren zur individuellen Betätigung der acht Schneidglieder 120. Dabei ist das Aktuatorglied 121 von den Schneidgliedern 120 getrennt ausgebildet und an dem jeweiligen Oberteil 105, 106 des Legekopfes 26 angeordnet. Die Schneidglieder 120 sind dagegen an dem zentralen Bereich 104 festgelegt. Nach einem Aufschwenken des Oberteils 105, 106 ist das Aktuatorglied 121 von den Schneidgliedern 120 abgelöst, so dass die Schneidglieder 120 auf schnelle und einfache Weise einer Wartung zugänglich sind.

Der Legekopf 26 funktioniert nun wie folgt:
Nach dem Verlegen eines Abschnitts einer Faserbahn auf einem Werkstück 12 sind die Faserstränge 13 durch die Schneidvorrichtung 119 abgetrennt und ein vorderes Ende der Faserstränge 13 befindet sich im Bereich der Schneidvorrichtung. Der Legekopf 26 ist in Verlegerichtung im Rahmen eines Verlegehubs maximal nahe an eine letzte raumfeste Umlenkung 56 der Faser-Bereitstellungseinheit 42 herangefahren. Der Legekopf 26 wird dann um einen kleinen Hub in z-Richtung von dem Werkstück abgehoben, damit die Kompaktierungsrolle 109 das Werkstück 12 nicht mehr berührt.

Sodann erfolgt ein Einklemmen der zu verlegenden Faserstränge 13 in der Klemmvorrichtung 111 des Legekopfes 26.

Nachfolgend wird der Legekopf 26 relativ zu der Faser-Bereitstellungseinheit 42 in der y-Richtung um einen Verlegehub in eine Startposition verfahren. Aufgrund der Klemmung werden dabei die Fasern um den Verlegehub aus der Faser-Bereitstellungseinheit 42 ausgezogen.

Nachfolgend wird der Legekopf 26 wieder ein Stück in Richtung einer letzten Umlenkung 56 der Faser-Bereitstellungeinheit verfahren, wobei die Vorförderrolle 115 die Fasern angetrieben fördert, bis die Faserbahn an der Kompaktierungsrolle 109 ankommt. Hierbei werden aufgrund der Bewegung des Legekopfes 26 keine Fasern aus der Faser-Bereitstellungeinheit 42 gezogen. Bei einem ersten Abschnitt der Vorförderung der Fasern kann die Klemmrolle noch im geklemmten Zustand verbleiben, da sie einen Freilauf in Förderrichtung der Fasern aufweist.

Nachfolgend wird die Klemmvorrichtung gelöst. Der Legekopf 26 wird zuvor oder nachfolgend auf das Werkstück 12 abgesenkt und befindet sich so in einer Startposition für das Verlegen der Faserbahn. Das Werkstück wurde gegebenenfalls zwischenzeitlich in eine geänderte Position bzw. Orientierung verbracht.

Dann wird der Legekopf 26 von der Startposition in eine Endposition unter Verlegung der Fasern 13 auf dem Werkstück 12 verfahren. Da die Faserstränge 13 zuvor aus der Faser-Bereitstellungseinheit 42 vorgezogen wurden, werden während des Ablegens der Fasern auf dem Werkstück 12 keine Fasern 13 aus der Faser-Bereitstellungseinheit 42 gezogen.

Es versteht sich, dass das erfindungsgemäße Vorziehen der Fasern um den Verlegehub unabhängig von einer Positionierung der Spulenlager 43, 44 realisierbar ist. Das Ausziehen um den Verlegehub erfolgt jeweils durch die Bewegung des Legekopfes relativ zu einer letzten raumfesten Umlenkung der Faser-Bereitstellungeinheit 42. Entsprechend ist die Positionierung insbesondere der Spulenjager 43, 44 relativ zu dem Legekopf 26 weitgehend frei wählbar.

## Patentansprüche

1. Faserlegemaschine (2) zur Herstellung von Fasergelegen, umfassend
einen Werkzeugtisch (23) zur Zuführung eines Werkstücks (12) entlang einer Zuführrichtung (x);
einen Legekopf (26) zum Aufbringen von Fasern (13) auf das Werkstück (12); und
eine Faser-Bereitstellungseinheit (42) zur Zuführung von mehreren Fasersträngen (13) zu dem Legekopf (26);
wobei die mehreren Faserstränge (13) an dem Legekopf (26) zu einer auf das Werkstück (12) aufzubringenden Faserbahn vereinigt werden;
wobei der Legekopf (26) relativ zu der Faser-Bereitstellungseinheit (42) in einer Verlegerichtung (y) bewegbar ist,
wobei an dem Legekopf (26) eine Klemmvorrichtung (111) zur lösbaren Klemmung der Faserstränge (13) angeordnet ist,
wobei eine Verlegung eines Abschnitts der Faserbahn (13) auf dem Werkstück (12) erfolgt, nachdem die Faserstränge (13) mittels des Legekopfes (26) um einen Verlegehub vorgezogen wurden, so dass während des Aufbringens der Fasern (13) auf dem Werkstück (12) keine Fasern (13) aus der Faser-Bereitstellungseinheit (42) gezogen werden.

2. Faserlegemaschine nach Anspruch 1, **dadurch gekennzeichnet, dass** die Faser-Bereitstellungeinheit (42) ortsfest angeordnet ist, wobei insbesondere der Legekopf (26) nur in genau einer Ebene relativ zu der Faser-Bereitstellungseinheit (42) verfahrbar ist.

3. Faserlegemaschine nach einem der vorhergehenden Ansprüche, **dadurch gekennzeichnet, dass** die Klemmvorrichtung (111) während des Verlegens des Abschnitts der Faserbahn (13) gelöst ist.

4. Faserlegemaschine nach einem der vorhergehenden Ansprüche, **dadurch gekennzeichnet, dass** die Klemmvorrichtung (111) zumindest eine, insbesondere zwei miteinander zusammenwirkende Klemmrollen (112, 113) umfasst.

5. Faserlegemaschine nach einem der vorhergehenden Ansprüche, **dadurch gekennzeichnet, dass** der Legekopf (26) zwei gewinkelt zueinander verlaufende Zuführungen (101, 102) umfasst, wobei mittels einer ersten der Zuführungen (101) eine erste Gruppe von Fasersträngen (13) und mittels der zweiten der Zuführungen (102) eine zweite Gruppe von Fasersträngen (13) in einen Kreuzungsbereich (103) geführt werden, um die beiden Gruppen von Fasersträngen (13) zu der Faserbahn zu vereinigen.

6. Faserlegemaschine nach einem der vorhergehenden Ansprüche, **dadurch gekennzeichnet, dass** die Fasern (13) mittels einer an dem Legekopf (26) angeordneten Schneidvorrichtung (119) abtrennbar sind, wobei die Schneidvorrichtung (119) eine Mehrzahl von separat ansteuerbaren Schneidgliedern (120) umfasst, die quer zu der Verlegerichtung verschiedene Teile der Fasern (13) abtrennen können.

7. Faserlegemaschine nach Anspruch 6, **dadurch gekennzeichnet, dass** die Schneidvorrichtung (119) ein Aktuatorglied (121) zur Betätigung zumindest eines der Schneidglieder (120) umfasst, wobei das Aktuatorglied (121) von dem Schneidglied (120) getrennt ausgebildet und insbesondere an einem zu Wartungszwecken ablösbaren Oberteil (105, 106) des Legekopfes (26) angeordnet ist.

8. Faserlegemaschine nach einem der vorhergehenden Ansprüche, **dadurch gekennzeichnet, dass** an dem Legekopf (26) zumindest eine Vorförderrolle (115) zum angetriebenen Vorschub vorgesehen ist, wobei die Vorförderrolle (115) zwischen der Klemmvorrichtung (111) und einer austrittsseitigen Kompaktierungsrolle (109) des Legekopfes (26) angeordnet ist.

9. Faserlegemaschine nach einem der vorhergehenden Ansprüche, **dadurch gekennzeichnet, dass** die Faserlegemaschine (2) vollständig auf einem Maschinengestell (15) aufgebaut ist.

10. Faserlegemaschine nach einem der vorhergehenden Ansprüche, **dadurch gekennzeichnet, dass** die Faserlegemaschine (2) ein klimatisch geschlossenes Gehäuse (58) umfasst.

11. Faserlegemaschine nach einem der vorhergehenden Ansprüche, **dadurch gekennzeichnet, dass** das Werkstück (12) auf einer automatisiert transportierbaren Palette (14) angeordnet ist.

12. Faserlegemaschine nach Anspruch 11, **dadurch gekennzeichnet, dass** eine das Werkstück (12) tragende Oberfläche der Palette (14) um einen Winkel von weniger als 30 Grad gegenüber einer Senkrechten geneigt ist.

13. Faserlegemaschine nach Anspruch 12, **dadurch gekennzeichnet, dass** die Verlegerichtung in einer Ebene verläuft, die weniger als 30 Grad gegenüber der Senkrechten geneigt ist.

14. Faserlegemaschine nach einem der vorhergehenden Ansprüche, **dadurch gekennzeichnet, dass** die jeweiligen Faserstränge (13) auf wechselbaren Spulen (46) aufgewickelt sind, wobei die Spulen (46) auf entgegen einer Abspulrichtung angetriebenen Drehachsen (47) sitzen, wobei die Antriebe der Drehachsen (47) eine Drehmomentbegrenzung aufweisen.

15. Verfahren zum Legen einer Faserbahn auf einem Werkstück (12), insbesondere mittels einer Vorrichtung nach einem der vorhergehenden Ansprüche, umfassend die Schritte:
a. Einklemmen der zu verlegenden Fasern (13) in einer Klemmvorrichtung (111) eines Legekopfes (26);
b. Verfahren des Legekopfes (26) relativ zu einer Faser-Bereitstellungseinheit (42) in eine Startposition, wobei die Fasern (13) um einen Verlegehub aus der Faser-Bereitstellungseinheit (42) ausgezogen werden;
c. Lösen der Klemmvorrichtung (111);
d. Verfahren des Legekopfes (26) von der Startposition in eine Endposition unter Verlegung der Fasern (13) auf dem Werkstück (12), so dass während des Aufbringens der Fasern (13) auf dem Werkstück (12) keine Fasern (13) aus der Faser-Bereitstellungseinheit (42) gezogen werden.

16. Verfahren nach Anspruch 15, **dadurch gekennzeichnet, dass** die Fasern (13) nach Schritt c. mittels einer angetriebenen Vorförderrolle (115) gegenüber dem Legekopf (26) bewegt werden, wobei die Fasern (13) insbesondere nicht mittels der Vorförderrolle (115) aus der Faser-Bereitstellungseinheit (42) ausgezogen werden.

## Claims

1. Fibre-laying machine (2) for producing fibrous non-wovens, comprising
a tool table (23) for infeeding a workpiece (12) along an infeed direction (x);
a depositing head (26) for applying fibres (13) to the workpiece (12); and
a fibre-supply unit (42) for infeeding a plurality of fibre strands (13) to the depositing head (26);
wherein the plurality of fibre strands (13) on the depositing head (26) are unified so as to form a fibrous web to be applied to the workpiece (12);
wherein the depositing head (26) in a laying direction (y) is movable relative to the fibre-supply unit (42),
wherein a clamping device (111) for releasably clamping the fibre strands (13) is disposed on the depositing head (26),
wherein laying of a portion of the fibrous web (13) on the workpiece (12) takes place once the fibre strands (13) by means of the depositing head (26) have been advanced by an advancing stroke such that no fibres (13) are drawn from the fibre-supply unit (42) while the fibres (13) are being applied to the workpiece (12).

2. Fibre-laying machine according to Claim 1, **characterized in that** the fibre-supply unit (42) is disposed so as to be locationally fixed, wherein in particular the depositing head (26) is repositionable relative to the fibre-supply unit (42) only in precisely one plane.

3. Fibre-laying machine according to either of the preceding claims, **characterized in that** the clamping device (111) is released during the laying of the portion of the fibrous web (13).

4. Fibre-laying machine according to one of the preceding claims, **characterized in that** the clamping device (111) comprises at least one, in particular two mutually interacting pinch rollers (112, 113).

5. Fibre-laying machine according to one of the preceding claims, **characterized in that** the depositing head (26) comprises two infeeds (101, 102) which run at a mutual angle, wherein a first group of fibre strands (13) by means of a first of the infeeds (101) and a second group of fibre strands (13) by means of the second of the infeeds (102) are guided into an intersection region (103) for unifying the two groups of fibre strands (13) so as to form the fibrous web.

6. Fibre-laying machine according to one of the preceding claims, **characterized in that** the fibres (13) are able to be severed by means of a cutting device (119) that is disposed on the depositing head (26), wherein the cutting device (119) comprises a plurality of separately actuatable cutting members (120) which, transversely to the laying direction, are able to sever various parts of the fibres (13).

7. Fibre-laying machine according to Claim 6, **characterized in that** the cutting device (119) comprises an actuator member (121) for activating at least one of the cutting members (120), wherein the actuator member (121) is configured separately from the cutting member (120) and is disposed in particular on an upper part (105, 106) of the depositing head (26) that is releasable for maintenance purposes.

8. Fibre-laying machine according to one of the preceding claims, **characterized in that** at least one pre-feed roller (115) is provided on the depositing head (26) for driven advancing, wherein the pre-feed roller (115) is disposed between the clamping device (111) and an exit-side compacting roller (109) of the depositing head (26).

9. Fibre-laying machine according to one of the preceding claims, **characterized in that** the fibre-laying machine (2) is constructed so as to be completely on one machine frame (15).

10. Fibre-laying machine according to one of the preceding claims, **characterized in that** the fibre-laying machine (2) comprises a climatically sealed housing (58).

11. Fibre-laying machine according to one of the preceding claims, **characterized in that** the workpiece (12) is disposed on a pallet (14) that is able to be transported in an automated manner.

12. Fibre-laying machine according to Claim 11, **characterized in that** a surface of the pallet (14) that supports the workpiece (12) is inclined at an angle of less than 30 degrees in relation to a vertical.

13. Fibre-laying machine according to Claim 12, **characterized in that** the laying direction runs in a plane which is inclined by less than 30 degrees in relation to the vertical.

14. Fibre-laying machine according to one of the preceding claims, **characterized in that** the respective fibre strands (13) are wound on interchangeable packages (46), wherein the packages (46) sit on rotating axles (47) that are driven counter to an unwinding direction, wherein the drives of the rotating axles (47) have a torque-limiting feature.

15. Method for laying a fibrous web on a workpiece (12), in particular by means of a device according to one of the preceding claims, said method comprising the steps:
a. clamping the fibres (13) to be laid in a clamping device (111) of a depositing head (26);
b. repositioning the depositing head (26) relative to a fibre-supply unit (42) into a starting position, wherein the fibres (13) are drawn from the fibre-supply unit (42) by an advancing stroke;
c. releasing the clamping device (111);
d. repositioning the depositing head (26) from the starting position into a terminal position while laying the fibres (13) on the workpiece (12) such that no fibres (13) are drawn from the fibre-supply unit (42) while the fibres (13) are being applied to the workpiece (12).

16. Method according to Claim 15, **characterized in that** the fibres (13) after step c. by means of a driven pre-feed roller (115) are moved relative to the depositing head (26), wherein the fibres (13) are in particular not drawn from the fibre-supply unit (42) by means of the pre-feed roller (115).

## Revendications

1. Machine à poser des fibres (2) destinée à produire des structures de fibres, comprenant
un plateau porte-outil (23) permettant d'amener une pièce à travailler (12) dans une direction d'amenée (x) ;
une tête de pose (26) pour appliquer des fibres (13) sur la pièce à travailler (12) ; et
une unité de fourniture de fibres (42) pour amener plusieurs brins de fibres (13) à la tête de pose (26) ;
les plusieurs brins de fibres (13) étant assemblés à la tête de pose (26) en une nappe de fibres à appliquer sur la pièce à travailler (12) ;
la tête de pose (26) étant mobile par rapport à l'unité de fourniture de fibres (42) dans une direction de pose (y),
un dispositif de serrage (111) pour un serrage amovible des brins de fibres (13) étant disposé à la tête de pose (26),
dans laquelle une pose d'une partie de la nappe de fibres (13) sur la pièce à travailler (12) est effectuée une fois que les brins de fibres (13) ont été avancés sur une course de pose au moyen de la tête de pose (26) de sorte que pendant l'application des fibres (13) sur la pièce à travailler (12) aucune fibre (13) n'est extraite de l'unité de fourniture de fibres (42).

2. Machine à poser des fibres selon la revendication 1, **caractérisée en ce que** l'unité de fourniture de fibres (42) est disposée de manière stationnaire, en particulier la tête de pose (26) ne pouvant être déplacée que dans exactement un plan par rapport à l'unité de fourniture de fibres (42).

3. Machine à poser des fibres selon l'une quelconque des revendications précédentes, **caractérisée en ce que** le dispositif de serrage (111) est desserré pendant la pose de la partie de la nappe de fibres (13).

4. Machine à poser des fibres selon l'une quelconque des revendications précédentes, **caractérisée en ce que** le dispositif de serrage (111) comprend au moins un rouleau de serrage, en particulier deux rouleaux de serrage (112, 113) coopérant l'un avec l'autre.

5. Machine à poser des fibres selon l'une quelconque des revendications précédentes, **caractérisée en ce que** la tête de pose (26) comprend deux dispositifs d'amenée (101, 102) s'étendant selon un angle l'un par rapport à l'autre, un premier des dispositifs d'amenée (101) guidant un premier groupe de brins de fibres (13) et le deuxième des dispositifs d'amenée (102) guidant un deuxième groupe de brins de fibres (13) dans une zone d'intersection (103) pour assembler les deux groupes de brins de fibres (13) afin de créer la nappe de fibres.

6. Machine à poser des fibres selon l'une quelconque des revendications précédentes, **caractérisée en ce que** les fibres (13) peuvent être sectionnées au moyen d'un dispositif de coupe (119) disposé au niveau de la tête de pose (26), le dispositif de coupe (119) comprenant une pluralité d'éléments coupants (120) pouvant être commandés séparément et qui peuvent séparer différentes parties des fibres (13) transversalement à la direction de pose.

7. Machine à poser des fibres selon la revendication 6, **caractérisée en ce que** le dispositif de coupe (119) comprend un élément actionneur (121) pour actionner au moins l'un des éléments coupants (120), l'élément actionneur (121) étant réalisé séparément de l'élément coupant (120) et en particulier sur une partie supérieure (105, 106), amovible à des fins de maintenance, de la tête de pose (26).

8. Machine à poser des fibres selon l'une quelconque des revendications précédentes, **caractérisée en ce qu'**au niveau de la tête de pose (26), au moins un rouleau de transport d'avance (115) est prévu pour une avance entraînée, le rouleau de transport d'avance (115) étant disposé entre le dispositif de serrage (111) et un rouleau de compactage (109) côté sortie de la tête de pose (26).

9. Machine à poser des fibres selon l'une quelconque des revendications précédentes, **caractérisée en ce que** la machine à poser des fibres (2) est entièrement installée sur un bâti de machine (15).

10. Machine à poser des fibres selon l'une quelconque des revendications précédentes, **caractérisée en ce que** la machine à poser des fibres (2) comprend un boîtier (58) fermé climatiquement.

11. Machine à poser des fibres selon l'une quelconque des revendications précédentes, **caractérisée en ce que** la pièce à travailler (12) est disposée sur une palette (14) transportable automatiquement.

12. Machine à poser des fibres selon la revendication 11, **caractérisée en ce qu'**une surface de la palette (14) portant la pièce à travailler (12) est inclinée selon un angle de moins de 30 degrés par rapport à la verticale.

13. Machine à poser des fibres selon la revendication 12, **caractérisée en ce que** la direction de pose s'étend dans un plan qui est incliné de moins de 30 degrés par rapport à la verticale.

14. Machine à poser des fibres selon l'une quelconque des revendications précédentes, **caractérisée en ce que** les brins de fibres (13) respectifs sont enroulés sur des bobines (46) échangeables, les bobines (46) étant placées sur des axes de rotation (47) entraînés dans le sens inverse d'une direction de déroulement, les entraînements des axes de rotation (47) présentant une limitation de couple.

15. Procédé permettant de poser une nappe de fibres sur une pièce à travailler (12), en particulier au moyen d'un dispositif selon l'une quelconque des revendications précédentes, comprenant les étapes consistant à :
a. serrer les fibres (13) à poser dans un dispositif de serrage (111) d'une tête de pose (26) ;
b. déplacer la tête de pose (26) par rapport à une unité de fourniture de fibres (42) dans une position initiale, les fibres (13) étant extraites de l'unité de fourniture de fibres (42) sur une course de pose ;
c. desserrer le dispositif de serrage (111) ;
d. déplacer la tête de pose (26) de la position initiale à une position finale en posant les fibres (13) sur la pièce à travailler (12), de sorte que pendant l'application des fibres (13) sur la pièce à travailler (12) aucune fibre (13) n'est extraite de l'unité de fourniture de fibres (42).

16. Procédé selon la revendication 15, **caractérisée en ce qu'**après l'étape c) les fibres (13) sont déplacées au moyen d'un rouleau de transport d'avance (115) entraîné par rapport à la tête de pose (26), les fibres (13) n'étant en particulier pas extraites de l'unité de fourniture de fibres (42) au moyen du rouleau de transport d'avance (115).
